(19) Europäisches Patentamt / European Patent Office / Office européen des brevets

(11)  **EP 3 628 790 B1**

(12)  **EUROPEAN PATENT SPECIFICATION**

(45) Date of publication and mention
of the grant of the patent:
**28.02.2024   Bulletin 2024/09**

(21) Application number: **18382685.8**

(22) Date of filing: **26.09.2018**

(51) International Patent Classification (IPC):
**E04B 2/88** *(2006.01)*         **B29C 70/52** *(2006.01)*

(52) Cooperative Patent Classification (CPC):
**E04B 2/88; B29C 70/16; B29C 70/52;** E06B 1/6007

(54)  **COMPOSITE PROFILE FOR CURTAIN WALLS**

VERBUNDPROFIL FÜR VORHANGFASSADEN

PROFILÉ COMPOSITE POUR CLOISONS DE SÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.04.2020   Bulletin 2020/14**

(73) Proprietors:
• **Fundación Tecnalia Research & Innovation
20009 Donostia-San Sebastian, Guipuzcoa (ES)**
• **AIMPLAS Instituto Tecnologico del Plastico
46980 Paterna, Valencia (ES)**
• **Envolventes Arquitectonicas Enar S.L.
28290 Las Rozas, Madrid (ES)**
• **Van Berkel en Bos U.N. Studio B.V.
1073 AX Amsterdam (NL)**

(72) Inventors:
• **Astudillo, Julen
20009 San Sebastián - Guipúzcoa (ES)**
• **Arregi, Beñat
20009 San Sebastián - Guipúzcoa (ES)**
• **Elguezabal, Peru
20009 San Sebastián - Guipúzcoa (ES)**

• **Garay, Roberto
20009 San Sebastián - Guipúzcoa (ES)**
• **Garcia, Miriam
20240 Ordizia (Guipuzkoa) (ES)**
• **Roig Asensi, Inma
46980 Paterna, Valencia (ES)**
• **Cerezo Miguel, Jesús M.
28290 Las Rozas, Madrid (ES)**
• **Calvo Peñagaricano, Ainara
28290 Las Rozas, Madrid (ES)**
• **Núñez Díaz, Miguel Ángel
28290 Las Rozas, Madrid (ES)**
• **van Berkel, Ben
1073 AX Amsterdam (NL)**

(74) Representative: **Balder IP Law, S.L.
Paseo de la Castellana 93
5ª planta
28046 Madrid (ES)**

(56) References cited:
EP-A1- 2 472 021      WO-A1-2017/219143
FR-A1- 3 037 856      US-A1- 2017 089 120

## Description

### TECHNICAL FIELD

The invention relates to the field of curtain walls. More particularly, the invention relates to a framing profile for curtain walls of reinforced composites comprising a thermoset resin matrix such as epoxy resin or polyester resin reinforced with a blend of high performance fibers and natural fibers.

### STATE OF THE ART

Curtain walls are parts of a building envelope made of a framework usually consisting of horizontal and vertical framing profiles, connected together and anchored to the supporting structure of the building, and containing fixed and/or openable infills, which provide all the required functions of an internal or external wall or part thereof, but do not contribute to the load bearing or the stability of the structure of the building. FR 3 037 856 A1 discloses structural profiles obtained by pultrusion production utilizing a matrix of thermoplastic resin.

The most typical curtain wall used at present comprises a framework usually consisting of horizontal and vertical framing profiles which are based on steel and aluminum. These materials have some disadvantages due to their thermal properties. They have high thermal conductivity and due to this, this type of framing profiles need to incorporate elements that break this thermal conductivity between the interior and the exterior of the facade. The elements known in the state of the art used to avoid the thermal bridges, caused by this high conductivity of the metallic materials, are of materials with lower thermal conductivity, like polyamides. The use of these elements based on polyamides complicates the fabrication process of these framing profiles that do not present satisfactory properties for use in curtain walls. Moreover, the presence of these polyamides lowers the mechanical strength of the profile

In view of the foregoing, there exists the need in the prior art to provide new framing profiles suitable for use in the manufacturing of curtain walls which overcome at least in part the disadvantages as above mentioned, and which are obtainable by means of a simple, reliable, cost-effective process.

### DESCRIPTION OF THE INVENTION

The inventors have shown that it is possible to obtain framing profiles from a reinforced composite comprising a thermoset resin and a fiber reinforcement blend, which feature good thermal properties and satisfactory mechanical properties, both of which make them suitable for its application in the manufacturing of curtain walls.

In fact, the curtain walls incorporating these framing profiles of the invention comply with the European standard from EN 13830:2015, which is the one that applies to these systems. This norm specifies the requirements of a curtain walling kit intended to be used as a building envelope to provide weather resistance, safety in use and energy economy and heat retention, and provides test/assessments/calculation methods and compliance criteria of the related performances. The curtain walling kit covered by EN 13830:2015 standard shall fulfil its own integrity and mechanical stability but does not contribute to the load bearing or stability of the main building structure, and could be replaced independently of it. The product standard also defines the normative references that need to be used in curtain walling applications.

The present invention provides in one aspect of the invention a framing profile having the features of claim 1.

The thermoset resin matrix typically comprises a thermoset resin, ingredients necessary for curing the resin (like a hardener, and a catalyst), optionally also an accelerator (to enhance the rate of the curing reaction), and optionally one or more additives to modulate the characteristics of the resulting reinforced thermosetting resin composite.

The **thermoset resin** of the thermoset resin matrix can be in principle any thermoset resin suitable for making composites without any particular limitation. These resins have been used in many varieties of fiber-reinforced composites to make parts and articles used in automobiles, aircraft, watercraft, wind turbines, construction materials, and many other types of equipment, and are known for the skilled person. Prior to curing, many thermoset resin compositions have relatively low viscosity, making them easy to mix with fibers to form a curable mix that is hardened into the final fiber-reinforced composite.

According to the present invention both synthetic thermoset resins, petroleum-derived, as well as the so called bioresins can be used. In some preferred embodiments bioresins are used for their advantages; namely, they are obtained from plant sources and/or renewable resources, such as wood pulp, or residues from biofuel production and are therefore more sustainable and ecofriendly products. Bioresins are commercially available.

Thermoset resins are based on polymerizable organic compounds, which are mixed with at least a hardener or at least a catalyst, undergoing then a non-reversible chemical reaction to form a hard, infusible product. If fibers are also used in this cross-linking process, composites are obtained.

Typically, in the present invention the thermoset resin is selected from the group of unsaturated polyester resins, epoxy resins, vinyl ester resins, polyurethanes, phenolic resins, furan resins and mixtures thereof.

Phenolic resins are a class of resins commonly based on a combination of an aromatic alcohol and an aldehyde, such as phenol, combined with formaldehyde. They cure through a condensation reaction producing typically water vapor or volatile substances such as formaldehyde as by-products (a 'condensation' reaction) that should be removed during processing, and can produce voids in the composite. Other thermoset resins such as polyester, vinyl ester and epoxy cure by mechanisms that do not produce any volatile by products and thus are preferred in the present invention for being easier to process.

In some preferred embodiments of the invention an unsaturated polyester resin is used, more preferably bio-polyesters. Unsaturated polyester resins, usually also referred to a polyester resin, that can be used in the present invention can be any unsaturated liquid uncured polyester resin suitable for the production of molded composites. Polyesters are widely used resin systems. Polyesters are in general made by condensation of different acids, polyols and monomers, all having varying properties. Maleic anhydride, phthalic acid, isophthalic acid, and their derivatives are common diacid compounds used in the preparation of polyesters. Typical polyols used are glycols such as ethylene glycol, among many others. The principle advantage of these resins is a balance of properties (including mechanical, chemical, and electrical) dimensional stability, cost and ease of handling or processing. Examples of polyester resins that can be used are orthophtalic and isophtalic polyesters.

Generally polyester resins are viscous liquids consisting of a solution of a polyester in a monomer. The monomer, for example the styrene, also performs the vital function of enabling the resin to cure from a liquid to a solid by 'cross-linking' the molecular chains of the polyester, without the evolution of any by-products. This is done by creating free radicals at unsaturated bonds, which propagate in a chain reaction to other unsaturated bonds in adjacent molecules, linking them in the process. The initial free radicals are induced for example by adding an initiator that easily decomposes into free radicals. Examples of initiators, which render free radicals by ionizing radiation, or photolytic or thermal decomposition, are organic peroxides, such as benzoyl peroxide or methyl ethyl ketone peroxide.

For moulding a polyester resin besides the addition of a curing agent (or cross-linking agent) and an initiator, optionally further diverse additives as below described can be incorporated in the resin mix. Polyester resins used in the present invention are commercially available. They can be directly supplied by manufactures in its basic form or with the additives already included. For example they can be supplied ready to be moulded by the simply addition of the initiator prior to moulding.

Accelerators may also be used to accelerate the polymerization reaction so that it can take place at workshop temperature and/or at greater rate. Since accelerators have little influence on the resin in the absence of an initiator they are sometimes added to the resin by the polyester manufacturer to create a 'pre-accelerated' resin. Care shall be taken in the preparation of the resin mix prior to moulding, which can be fulfilled by following manufactures instructions.

In other exemplary preferred embodiments of the invention an epoxy resin is used, more preferably a bioepoxy. Epoxy resins are typically liquid uncured suitable for the production of molded composites, and also known in the art. Epoxies are preferred in some embodiments since they out-perform other thermoset resin types in terms of mechanical properties and resistance to environmental degradation. Both the liquid resin and the curing agents form low viscosity easily processed systems. Epoxy resins are typically cured at any temperature from 5°C to 180°C, depending on the choice of the resin itself, the curing agent, also called hardener, and also the accelerator, if added. One of the most advantageous properties of epoxies is their low shrinkage during cure. Epoxy resins are formed from a long chain molecular structure with reactive sites at either end formed by epoxy groups.

The curing agent reacts with the reactive epoxy oligomers to become part of the final hardened thermoset polymer structure of the fiber reinforced thermosetting resin composite of the invention. The curing agent is often polyfunctional and capable of bonding with more than one reactive sites of the epoxy oligomers. The multiple bonding reactions between the curing agent and the epoxy oligomers render a crosslinked network of the hardened thermoset polymer.

Exemplary curing agents for an epoxy resin may include amines, organic acids, organic anhydrides, alcohols, amides, and thiols, among other epoxy resin curing agents. Exemplary amine curing agents include unmodified amines, and modified amines that contain other functional groups capable of reacting with the epoxy resin, such as hydroxyl groups (-OH), carboxyl groups (-COOH), amide groups (-C(=O)N-), and anhydride groups, among other groups. Specific examples of amine curing agents may include ethylene amines (e.g., ethylene diamine (EDA), diethylene triamine (DETA), triethylene tetramine (TETA), and tetraethylene pentamine (TEPA)); 3,3'-dimethylmethylene-di(cyclohexylamine); methylene-di(cyclohexylamine); 4,4'-diaminodiphenyl methane (DDM); m-phenylene diamine (MPD); 3,3'-diaminodiphenyl sulphone (3,3'-DDS); 4,4'-diaminodiphenyl sulphone (4,4'-DDS); and dicyandiamide among other amine curing agents. Exemplary organic acids and organic acid anhydrides may include organic diacids such as phthalic acid, tetrahydrophthalic acid, hexahydrophthalic acid, trimellitic acid, pyromellitic acid, methylnadic acid, chlorendic acid, tetrabromophthalic acid, and dichloromaleic acid, among other organic acid. They may also include the corresponding organic anhydrides such as phthalic anhydride, tetrahydrophthalic anhydride, hexahydrophthalic anhydride, trimellitic anhydride, pyromellitic anhydride, methylnadic anhydride, chlorendic anhydride, tetrabromophthalic anhydride, and dichloromaleic anhydride, among other organic anhydrides.

Exemplary alcohols may include polyols and polyfunctional alcohols that have one or more functional groups capable of reacting with the epoxy resin beyond a hydroxyl group. Exemplary alcohols may include phenols, and polyphenols such as bisphenol A. Exemplary thiols (also known as mercaptans) may include polymercaptan compounds, and polysulfide resins.

An accelerator may be added, that can increase the curing rate of the thermoset resin, reduce its curing temperature, or both. Since hardener molecules 'co-react' with the epoxy molecules in a fixed ratio, it is important that the correct mix ratio is obtained between resin and hardener to ensure that a complete reaction takes place. To assist with the accurate mixing of the resin, hardener and accelerator, manufacturers usually formulate the components to give a simple mix ratio which is easily achieved by measuring out by weight or volume.

Exemplary accelerators that may be used in conjunction with an epoxy resin may include alcohols, carboxylic acids, amines, and urea compounds, and Lewis acids, among other accelerators. For example, alcohol accelerators may include benzyl alcohol; carboxylic accelerators may include salicylic acid; amine accelerators may include tertiary amines such as benzyl dimethyl amine (BDMA), and 2,4,6-tris-dimethylaminomethyl-phenol. Exemplary accelerators may also include urea compounds such as aryl dimethylurea compounds like 3-(4-chlorophenyl)-1,1-dimethyl urea (Monuron), and toluene bisdimethylurea.

It should be appreciated that some compounds may act as both a curing agent and an accelerator as those terms are used in the present application. For example imidazoles may function as both curing agents and accelerators for epoxy resins.

Exemplary epoxy resins may include the class of resins formed by the reaction of epichlorohydrins with bisphenol A to form diglycidyl ethers of bisphenol A. These epoxy resins are sometimes referred to as DGEBA (diglycidyl ethers of bisphenol A) or BADGE epoxy resins. Another class of epoxy resins contain bisphenol F instead of bisphenol A (DGEBF). Exemplary epoxy resins may also include aliphatic epoxy resins, cycloaliphatic epoxy resins, glycidyl epoxy resins, glycidylamine epoxy resins, epoxy phenol novolacs (EPNs), and epoxy cresol novalacs (ECN), among other epoxy resins.

## Fibers

### High performance fibers

Exemplary high performance fibers that can be used in the present invention may include one or more types of fibers chosen from glass fibers, ceramic fibers, carbon fibers, boron fibers, organic polymer fibers, among others. These fibers are commercially available. In some embodiments carbon fibers, boron fibers or organic polymer fibers are used but these fibers present the disadvantage that are relatively expensive. In other exemplary embodiments glass fibers are used which are more cost-effective and provide the stiffness necessary for the present application.

Exemplary glass fibers may include "E-glass", "A-glass", "C-glass", "S-glass", "ECR-glass" (corrosion resistant glass), "T-glass", and fluorine and/or boron-free derivatives thereof. Exemplary ceramic fibers may include aluminum oxide, silicon carbide, silicon nitride, silicon carbide, and basalt fibers, among others. Exemplary carbon fibers may include graphite, semicrystalline carbon, and carbon nanotubes, among other types of carbon fibers. Exemplary organic polymer fibers may include poly aramid fibers, polyester fibers, and polyamide fibers, among other types of organic polymer fibers.

The fibers used in the embodiments of the present invention are continuous fibers in form of roving. Rovings are continuous fibers suitable for use in pultrusion process, like the process of the invention disclosed below.

Suitable fibers for use in the invention can have tex values and densities which vary within wide ranges. In some preferred examples of the invention glass fibers are used. Suitable glass fibers present 4000 to 5.500 tex and density of 2.00 to 3.00 g/cm$^3$, or 4500 to 5000 tex and density of 2.2 to 2.7 g/cm$^3$, more preferably 4800 tex and density of 2.55 g/cm$^3$.

### Natural fibers

Examples of reinforcing natural fibers include, for example, those of linen, kenaf, hemp, abaca, wool, cotton, sisal, flax, etc. These are well known in the art for the manufacturing of textiles, insulating materials, composites etc.

The natural fibers used in the embodiments of the present invention are continuous fibers in form of roving. Continuous natural fiber roving is a fiber structure that is produced for example from natural sources such as sliver, which is stretched and strengthened.

In some embodiments, flax fiber is used, preferably a low twist long flax fiber in order to assure impregnation and good mechanical properties of the framing profiles.

Natural fibers are commercially available, for example flax fiber can be obtained from SAFILIN.

Suitable fibers for use in the invention can have tex values and densities which vary within wide ranges. In some preferred examples of the invention flax fibers are used. Suitable flax fibers present 1000 to 3000 tex and density of 1.00 to 2.00 g/cm$^3$, or 1500 to 2500 tex and density of 1.2 to 1.7 g/cm$^3$, more preferably 2000 tex and density of 1.45 g/cm$^3$ are used.

The inventors of the present invention have shown that it is possible to manufacture framing profiles that present the required characteristics in terms of mechanical properties and thermal properties which render them suitable for use in many applications, in particular for curtain walls. The framing profiles are manufactured from reinforced thermosetting resin composites as defined above comprising a blend of high performance fibers and natural fibers in the herein defined proportions. The use of natural fibers in the blend reduces the production costs of the framing profiles, by reducing the amount of high performance fibers, which are more expensive, and implies the revaluation and recycling of residual natural materials.

The fiber reinforcement comprises in some embodiments

10 to 20 wt%, or 14 to 20 wt% or 16 to 20 wt% or 18 to 20 wt%, for example 18.5 wt% or 19 wt%, or 19.5 wt% in respect of the total weight of the fiber reinforcement of natural fibers, preferably flax fibers, and
80 to 90 wt% or 80 to 86 wt% or 80 to 84 wt%, or 80 to 82 wt%, for example 80.5 wt% or to 81 wt% or 81.5 wt% in respect of the total weight of the fiber reinforcement of high performance fibers selected from the group of glass fibers, ceramic fibers, carbon fibers, boron fibers, organic polymer fibers and mixtures thereof, preferably glass fibers.

In some examples the fiber reinforcement comprises 16 to 20 wt% or 18 to 20 wt%, preferably 18.75 to 20 wt% of flax fibers and 80 to 84 wt% or 80 to 82 wt%, preferably 80 to 81.25 wt% of glass fibers and the thermoset resin is a polyester. In other examples the fiber reinforcement comprises 16 to 20 wt% or 18 to 20 wt%, preferably 18.75 to 20 wt% of flax fibers and 80 to 84 wt% or 80 to 82 wt%, preferably 80 to 81.25 wt% of glass fibers and the thermoset resin is an epoxy, preferably a bioepoxy.

The fibers used in the invention are provided as yarns, where a yarn is a spun agglomeration of fibers. The number of yarns of each of high performance fibers and natural fibers used for manufacturing a framing profile can vary within a broad range depending on various factors such as the size and dimensions of the framing profile to be obtained; the nature of the fibers; the concrete fibers blend; the characteristics of the fibers used, and the nature of the resin mix, among others. Typically, the number of yarns of high performance fibers, preferably glass fibers, can vary between 3 and 20, for example between 4 and 18, or for example between 5 and 19, for example 10, 14 or 17.

Typically the number of yarns of natural fibers, preferably flax fibers, can vary between 1 and 5, for example between 1 and 4, for example 2 or 3.

In some embodiments the reinforced thermosetting resin composite comprises

(a) 20 to 80 wt% in respect of the total weight of the composite of a thermoset resin matrix, comprising an epoxy resin, preferably a bioepoxy resin or a polyester resin; and
(b) 20 to 80 wt% in respect of the total weight of the composite of a fiber reinforcement,

Wherein said fiber reinforcement comprises

16 to 20 wt% or 18 to 20 wt%, preferably 18.75 to 20 wt% in respect of the total weight of the fiber reinforcement of flax fibers consisting of 4 to 1 yarns, and
80 to 84 wt% or 80 to 82 wt%, preferably 80 to 81.25 wt% in respect of the total weight of the fiber reinforcement of glass fibers consisting of 5 to 19 yarns.

In some other embodiments the reinforced thermosetting resin composite comprises

(a) 30 to 70 wt% in respect of the total weight of the composite of a thermoset resin matrix, comprising an epoxy resin, preferably a bioepoxy resin or a polyester resin; and
(b) 30 to 70 wt% in respect of the total weight of the composite of a fiber reinforcement,

Wherein said fiber reinforcement comprises

16 to 20 wt% or 18 to 20 wt%, preferably 18.75 to 20 wt% in respect of the total weight of the fiber reinforcement of flax fibers consisting of 4 to 1 yarns, and
80 to 84 wt% or 80 to 82 wt%, preferably 80 to 81.25 wt% in respect of the total weight of the fiber reinforcement of glass fibers consisting of 7 to 17 yarns.

In some other embodiments the reinforced thermosetting resin composite comprises

(a) 40 to 60 wt% in respect of the total weight of the composite of a thermoset resin matrix, comprising an epoxy resin, preferably a bioepoxy resin or a polyester resin; and
(b) 40 to 60 wt% in respect of the total weight of the composite of a fiber reinforcement,

Wherein said fiber reinforcement comprises

16 to 20 wt% or 18 to 20 wt%, preferably 18.75 to 20 wt% in respect of the total weight of the fiber reinforcement of flax fibers consisting of 2 to 3 yarns, and
80 to 84 wt% or 80 to 82 wt%, preferably 80 to 81.25 wt% in respect of the total weight of the fiber reinforcement of glass fibers consisting of 9 to 15 yarns.

In some other embodiments the reinforced thermosetting resin composite comprises

(a) 50 wt% in respect of the total weight of the composite of a thermoset resin matrix, comprising an epoxy resin, preferably a bioepoxy resin or a polyester resin; and
(b) 50 wt% in respect of the total weight of the composite of a fiber reinforcement,

Wherein said fiber reinforcement comprises

16 to 20 wt% or 18 to 20 wt%, preferably 18.75 to 20 wt% in respect of the total weight of the fiber reinforcement of flax fibers consisting of 2 to 3 yarns, and
80 to 84 wt% or 80 to 82 wt%, preferably 80 to 81.25 wt% in respect of the total weight of the fiber reinforcement of glass fibers consisting of 11 to 13 yarns.

In embodiments of the invention blends of glass fibers and flax fibers can be used, in any combination of the ranges and subranges above disclosed. Preferably blends of glass fibers of 4800 tex and density of 2.55 g/cm$^3$ and flax fibers of 2000 tex and density of 1.45 g/cm$^3$.

The thermoset resin matrix may also comprise additives.

For example, the matrix may include additives such as pigments, fillers, chemical and/or fire resistance agents, shrinkage control agents, mold release agents, coupling agents, film-forming agents, lubricants, and wetting agent, among other compounds.

The fillers may include mica, clay, silica, calcium carbonate, diatomaceous earth, alumina, calcium silicate, carbon black, and titanium dioxide. Fillers are selected to provide bulk at low cost and may also confer other valuable properties to the composite such as hardness, stiffness, color, abrasion resistance, reduced thermal expansion, flame resistance, chemical resistance, and a sink for the heat evolved during curing. The filler may be surface treated with a coupling agent or finishing agent to promote adhesion and compatibility with the particular resin employed.

The coupling agents may act as chemical linking agents by bonding to both the fibers and the plastic matrix. Exemplary coupling agents may include silanes containing organosilane groups may be coupling agents for glass fibers and organic polymers, and serve to bond the two materials in the composite article.

Film forming agents may provide a desired degree of bonding between the fibers in the fiber strands to avoid fuzzing during processing in fiber manufacturing operations and/or fiber composite fabrication operations.

Lubricants help protect the surface of the fibers from scratches and abrasions commonly caused by fiber-to-fiber contact and friction during processing.

Wetting agents facilitate the wetting of the sizing composition on the surface of the fibers, and may also facilitate the wetting of the thermoset resin on the surface of the sized fibers.

In some particular embodiments the resin matrix includes graphene, which can be added for example in an amount of 0.5 wt% to the resin matrix.

In another aspect the invention provides a continuous pultrusion process for manufacturing the framing profile of the invention which comprises the steps of:

(I) impregnating a fiber reinforcement with a resin mix composition;
(II) preforming the impregnated fibers as the profile to be obtained,
(III) curing the profile preform from previous step (II).

On one hand a resin mix composition is prepared, depending on the concrete framing profile to be obtained. The resin mix composition is hardened rendering the herein referred to thermoset resin matrix. The resin mix composition includes the selected resin and at least one cross-linking agent, such as initiators, or curing agents, and also accelerators, and optionally also additives, as above defined.

In some examples of the invention the resin mix composition presents the following composition (% expressed in wt% with respect to the total of the composition):

77.3 to 79.3% of a polyester;
0.7 to 2.4 % of curing agent and initiator, and optionally an accelerator; and
20 to 20.3 % of one or more additives.

In some other embodiments of the invention the resin mix composition presents typically the following composition (% expressed in wt% with respect to the total weight of the composition):

77.3 to 79.3% of an epoxy resin, preferably a bioepoxy;
0.7 to 2.4 % of curing agent and a catalyst, and optionally an accelerator; and
20 to 20.3 % of one or more additives.

In the process of the invention the selected fiber reinforcement is fed into a pultrusion system. To that end, various yarns of continuous fibers (roving) are pulled and guided by adequate means, such as a plate, towards a resin impregnator in the pultrusion system. Impregnation of the fibers with the resin mix composition can be carried out by conventional means, for example, by dipping the fibers into a resin bath.

The impregnated fibers are further pulled and introduced in a heated stationary die, where they are preformed in the form of the framing profile, and subsequently the preform is cured by the heated die where the resin undergoes cross-linking.

The dimensions and form of the stationary die are determined by those of the framing profile to be obtained.

The curing conditions include elevating the temperature of the preformed impregnated fibers above a curing-threshold temperature. Some exemplary resin mixes may have a curing-threshold temperature ranging from 10 ºC to 180 ºC. In other examples curing is at room temperature, e.g., about 20°C to 160°C; in others from 80°C to 150°C.

The speed of the pultrusion process can vary depending on various factors such as the selected resin mix. Typically the pultrusion process is carried out at a speed between 1 and 5 mm/s, for example between 2 and 4 mm/s. In some examples speed is between 3 and 3.5 mm/s, like 3.2 mm/s.

The process of the invention may further comprise the heating of the impregnation resin mix, and also a post-curing step once the framing profiles are going out of the die. Post-curing is typically carried out in case bioepoxy resins are used.

The pultrusion process of the invention provides for the continuous manufacturing of framing profiles in one piece. Also the process of the invention may further advantageously comprise a step of cutting the framing profile obtained according to the desired size for example with a saw.

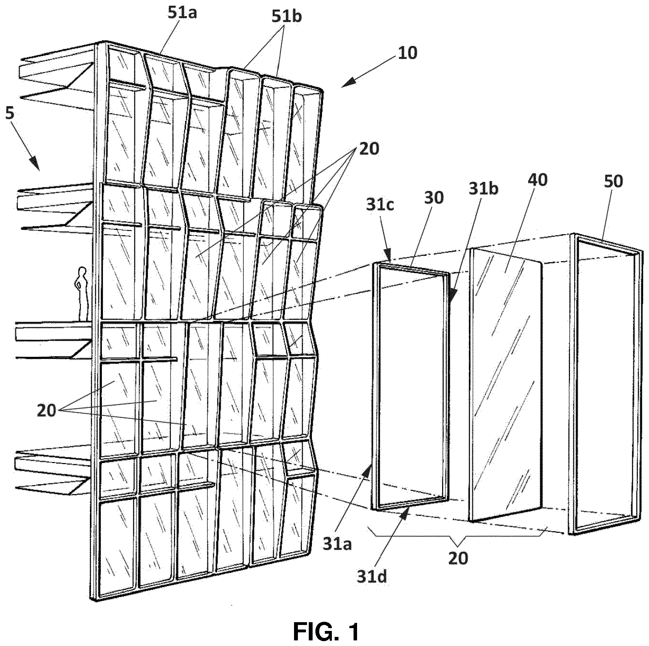

The framing profile of the invention can be used for manufacturing a curtain wall. Accordingly, in a further aspect the invention relates to the use of the framing profile of the invention for manufacturing a curtain wall. This use avoids the use of a thermal bridge break element, as in the case of framing profiles from the state of the art of steel or aluminium since, as the inventors have shown, that the framing profile itself as a whole performs as thermal bridge break element, and also presents adequate mechanical properties (according to EN 13830:2015).In still a further aspect the invention relates to a curtain wall comprising framing profiles according to the present disclosure. An illustrative curtain wall in a curtain wall system according to the invention is represented in Fig. 1. Curtain walls according to the invention show good thermal performance, in particular good heat transfer coefficient (U-values) and good structural stability. The hydrothermal features of the curtain wall of the invention also prevent formation of vapour condensation on the inside or outside surfaces of the building where they are installed, or on the interior of the curtain wall itself thereby protecting the wall from problems such as fungal growth in cold spots on its internal surface. Such a problem occurs when a thermal bridge is present.

The curtain wall comprises four framing profiles, two horizontal and two vertical, and the curtain wall further comprises glass. The glass has a thermal transmission coefficient U, and is surrounded and supported by the four framing profiles.

In some embodiments, the thermal transmission coefficient U is $0.6 \leq U \leq 1.1$; a depth of the framing profiles is greater than or equal to 150 mm and less than or equal to 200 mm; a length L1 of the two vertical framing profiles is $2.0 \leq L1 \leq 6.0$ m; and a length L2 of the two horizontal framing profiles is $1.0 \leq L2 \leq 3.0$ m.

In some embodiments, the thermal transmission coefficient U is $1.1 < U \leq 1.9$; a depth of the framing profiles is greater than or equal to 150 mm and less than or equal to 200 mm; a length L1 of the two vertical framing profiles is $2.5 \leq L1 \leq 6.0$; and a length L2 of the two horizontal framing profiles is $1.75 \leq L2 \leq 3.0$ m.

In some embodiments, the thermal transmission coefficient U is $1.1 < U \leq 1.9$; a depth of the framing profiles is greater than or equal to 150 mm and less than or equal to 175 mm; a length L1 of the two vertical framing profiles is $3.0 \leq L1 \leq 6.0$; and a length L2 of the two horizontal framing profiles is $1.25 \leq L2 \leq 3.0$ m.

The depth of the framing profiles is a dimension in a direction extending out from the building (or towards the building, which is the same but opposite direction).

The objective of the examples hereinafter is to illustrate the invention more fully without, however, limiting the scope thereof.

**EXAMPLE 1**

Framing profiles were obtained from the following reinforced thermosetting resin composition The composite comprised the following thermoset resin matrix composition and fiber reinforcement

Thermoset resin matrix composition was 20 wt% of the composite and obtained from the following resin mix composition:

| Material | Commercial name | wt% |
|---|---|---|
| Bioepoxy resin: | SuperSap SS300 | 77.6% |
| Curing agent | FRS 6008. Supplier: Elmira | 19.4% |
| Hardener | 2,4 EMI | 2.4% |
| Mould release agent | Acmosal 82-866 | 0.6% |

The fiber reinforcement was 80 wt% of the composite and comprised 81.25 wt% glass fiber (65 wt% of the composite) and 18.75 wt% flax fiber (15 wt% of the composite).

The glass fibers consisted of 19 yarns of 4800 tex and density = 2.55 g/cm$^3$
The flax fibers consisted of 4 yarns of 2000 tex and density = 1.45 g/cm$^3$
The framing profiles were obtained by pultrusion.
Curing was performed in cycles at 120 ºC, 140 ºC and 160 ºC
Clam pressure: 20 bar (2 MPa)
Speed: 3.2 mm/s.

**EXAMPLE 2**

Framing profiles were obtained from the following reinforced thermosetting resin composition The composite comprised the following thermoset resin matrix composition and fiber reinforcement

Thermoset resin matrix composition was 20 wt% of the composite and obtained from the following resin mix composition:

| Material | Commercial name | wt% |
|---|---|---|
| Polyester resin: | Vinalkyd 550 PE-R/61) | 79.04 % |
| Curing agent | LP-40 | 19.76 % |
| Hardener | Trigonox C | 0.48 % |
| | Perkadox 16S | 0.24 % |
| Mould release agent | MOLD-WIZ INT-PUL 24 | 0.48 % |

The fiber reinforcement was 80 wt% of the composite and comprised 81.25 wt% glass fiber (65 wt% of the composite) and 18.75 wt% (15 wt% of the composite) flax fiber.

The glass fibers consisted of 19 yarns of 4800 tex and density = 2.55 g/cm$^3$
The flax fibers consisted of 4 yarns of 2000 tex and density = 1.45 g/cm$^3$
The framing profiles were obtained by pultrusion.
Curing was performed in cycles at 120 ºC, 140 ºC and 160 ºC
Clam pressure: 20 bar (2 MPa)
Speed: 3.2 mm/s.

### EXAMPLE 3

Framing profiles were obtained from the following reinforced thermosetting resin composition The composite comprised the following thermoset resin matrix composition and fiber reinforcement

Thermoset resin matrix composition was 80 wt% of the composite and obtained from the following resin mix composition:

| Material | Commercial name | wt% |
|---|---|---|
| Polyester resin: | Vinalkyd 550 PE-R/61) | 79.04 % |
| Curing agent | LP-40 | 19.76 % |
| Hardener | Trigonox C<br>Perkadox 16S | 0.48 %<br>0.24 % |
| Mould release agent | MOLD-WIZ INT-PUL 24 | 0.48 % |

The fiber reinforcement was 20 wt% of the composite and comprised 80 wt% glass fiber (16 wt% of the composite) and 20 wt% (4 wt% of the composite) flax fiber.

The glass fibers consisted of 5 yarns of 4800 tex and density = 2.55 g/cm$^3$
The flax fibers consisted of 1 yarns of 2000 tex and density = 1.45 g/cm$^3$
The framing profiles were obtained by pultrusion.
Curing was performed in cycles at 120 $\underline{o}$C, 140 $\underline{o}$C and 160 $\underline{o}$C
Clam pressure: 20 bar (2 MPa)
Speed: 3.2 mm/s.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

Figure 1 shows a curtain wall system with an exploded view of a curtain wall.
Figures 2-4 partially show a cross-section of curtain wall systems according to embodiments.
Figure 5 shows a table with the elastic modulus of framing members of curtain walls according to embodiments.
Figures 6-8 show maximum wind loads supported by framing members of curtain walls according to embodiments.
Figures 9-11 show thermal transmission coefficients of curtain walls according to embodiments.

### DESCRIPTION OF WAYS OF CARRYING OUT THE INVENTION

Figure 1 shows a curtain wall system 10 provided in front of a building 5.

The curtain wall system 10 comprises a plurality of curtain walls 20 arranged side-by-side forming a plurality of rows of curtain walls 20. Each row of curtain walls 20 (other than the one at the bottom of the curtain wall system 10) is arranged on top of another row of curtain walls 20. The curtain wall system 10 does not carry any structural load of the building 5.

Each curtain wall 20 comprises a frame 30 with a plurality of framing profiles or members (two horizontal framing profiles or members 31c-31d, also referred to as transoms, one at the top 31c and one at the bottom 31d, and two vertical framing profiles or members 31a-31b, also referred to as mullions, one at the left 31a and one at the right 31b), and glass 40. The curtain walls 20 may be partially covered by a decorative frame 50, 51a, 51b for aesthetic purposes. Such decorative frames 50, 51a, 51b may for instance hide the framing profiles or members of the frame 30 from sight. For illustrative purposes only, an exploded view of a curtain wall 20 with a decorative frame 50 is provided.

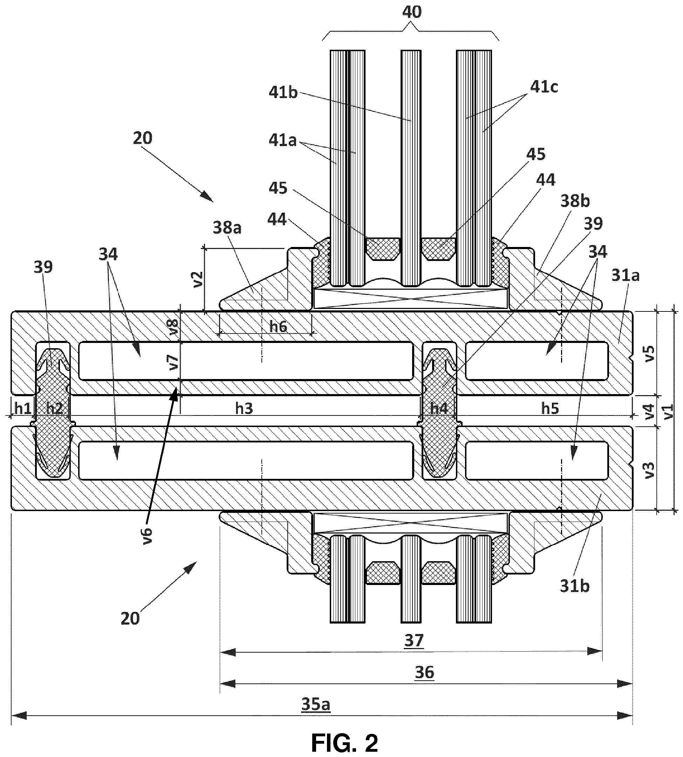

Figure 2 partially shows a cross-section of a curtain wall system according to an embodiment.

The curtain wall system has a plurality of curtain walls 20 assembled. In Figure 2 there are partially shown a first framing member 31a of a first curtain wall 20 and a second framing member 31b of a second curtain wall 20 that are assembled by means of a plurality of assembling elements 39 (e.g. rubber seals or gaskets), which are provided on the perimeter of the framing members 31a-31b. Preferably, the assembly of the framing members 31a-31b with the assembling elements 39 is hermetic. The first and the second framing members 31a-31b are vertical framing members or mullions of the frames of the curtain walls 20. The first and the second curtain walls 20 are adjacent in a row of curtain walls 20 of the curtain wall system.

Each framing member 31a-31b comprises first and second supporting elements 38a, 38b between which glass 40 is provided. The glass 40 comprises one or more glass panes 41a-41c that may or may not be spaced apart having a gas or vacuum therebetween. By way of example, the one or more glass panes 41a-41c includes a first pair of glass panes 41a spaced apart from a first supporting element 38a by a seal 44 (e.g. silicone seals or gaskets), a glass pane 41b spaced apart from the first pair of glass panes 41a by a spacer 45, and a second pair of glass panes 41c spaced apart from the glass pane 41b by a spacer 45 and spaced apart from the second supporting element 38b by a seal 44. It is readily apparent for the skilled person that different glass 40 configurations are possible within the scope of the present disclosure, for example glass commercially available may be (already assembled or not) suitable for the curtain walls disclosed herein, such as insulating glass with e.g. one, two or three glass window panes and which may be separated by vacuum or gas that fills the space(s) therebetween.

Each framing member 31a-31b further comprises two voids 34 in which brackets may be provided for forming the curtain wall, which when mounted form the curtain wall square module.

In the example of Figure 2 the dimensions of the framing members 31a-31b are as follows: h1 = 8 mm; h2 = 11 mm; h3 = 114 mm; h4 = 11 mm; h5 = 56 mm; h6 = 30 mm; v1 = 64 mm; v2 = 20 mm; v3 = 27 mm; v4 = 10 mm; v5 = 27 mm; v6 = 5 mm; v7 = 12 mm; and v8 = 10 mm. A depth 35a of each framing member 31a-31b is 200 mm. A length L1 (in meters) of the first and the second framing members 31a-31b is as shown in the next table based on a thermal transmission coefficient U of the glass:

| Thermal transmission coefficient U [W/m$^2$K] of the glass | Length L1 [m] of mullions |
| --- | --- |
| 0.6≤U≤1.1 | 2.0≤L1≤6.0 |
| 1.1<U≤1.9 | 2.5≤L1≤6.0 |

A length L2 (in meters) of the horizontal framing members or transoms (not illustrated) of the frames of the curtain walls 20 is as shown in the next table based on the thermal transmission coefficient U of the glass:

| Thermal transmission coefficient U [W/m$^2$K] of the glass | Length L2 [m] of transoms |
| --- | --- |
| 0.6≤U≤1.1 | 1.0:5L2:53.0 |
| 1.1<U≤1.9 | 1.25≤L2≤3.0 |

The depth and the width of the horizontal framing members are as indicated above with reference to the first and second framing members 31a-31b. In these and in other embodiments, the depth and the width (i.e. the v5 dimension) of all the framing members may be selected based on a wind load that the curtain walls shall support, and also based on a length between supporting points (i.e. height or separation between slabs of a building).

Preferably, in some examples in which the framing members are the framing members 31a-31b illustrated in Figure 2, the lengths L1 and L2 are selected such as follows:

| Thermal transmission coefficient U [W/m$^2$K] of the glass | Length L1 [m] of mullions | Length L2 [m] of transoms |
| --- | --- | --- |
| 0.6≤U≤1.1 | 2.0≤L1≤6.0 | 1.0≤L2≤3.0 |
| 1.1<U≤1.9 | 2.5≤L1≤6.0 | 1.75≤L2≤3.0 |
| | 5.0≤L1≤6.0 | 1.25≤L2≤3.0 |

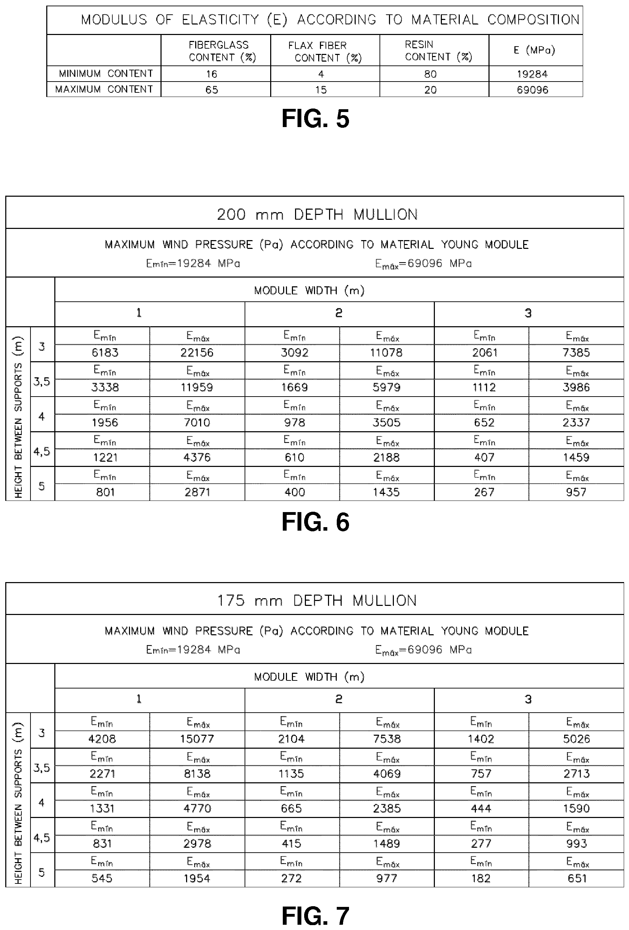

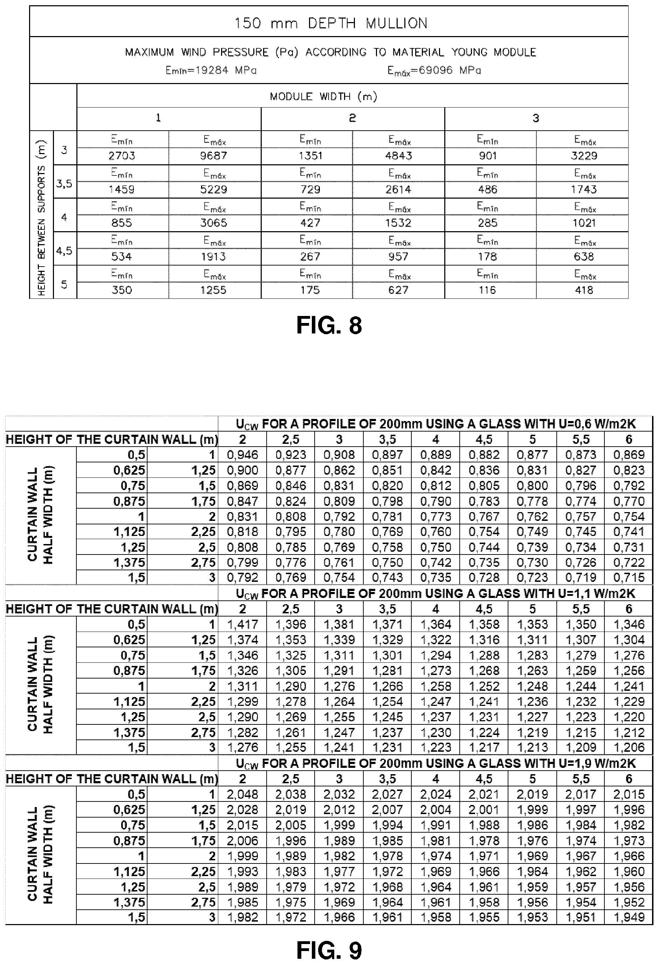

Therefore, in these examples the frames and the curtain walls may have an area ranging from 2.0x1.0 m$^2$ to 6.0x3.0 m$^2$ (both endpoints being included), the dimensions corresponding to height and width, respectively. These dimensions are based on the results indicated in Figures 6 and 9. The maximum dimensions are, however, dependent upon the composition of the framing members as set out below with reference to Figures 5-8.

A width 37 of the glass 40 together with the supporting elements 38 is less than the depth 35a, and may be adjusted according to the desired curtain wall, for instance based on the number of glass panes 41a-41c of the glass 40 and the thickness thereof, and a thickness of the first and second supporting elements 38a-38b and/or the spacers 45. Further, a distance 36 between a first end (on the left, which is the end closest to the building) of the first supporting element 38a and a first end (on the right, which is the end farthest away from the building) of the curtain wall is equal to or greater than the width 37, and less than the depth 35a. It is readily apparent for the skilled person that other embodiments in which the glass 40 is positioned closer to the first end also fall within the scope of the present disclosure.

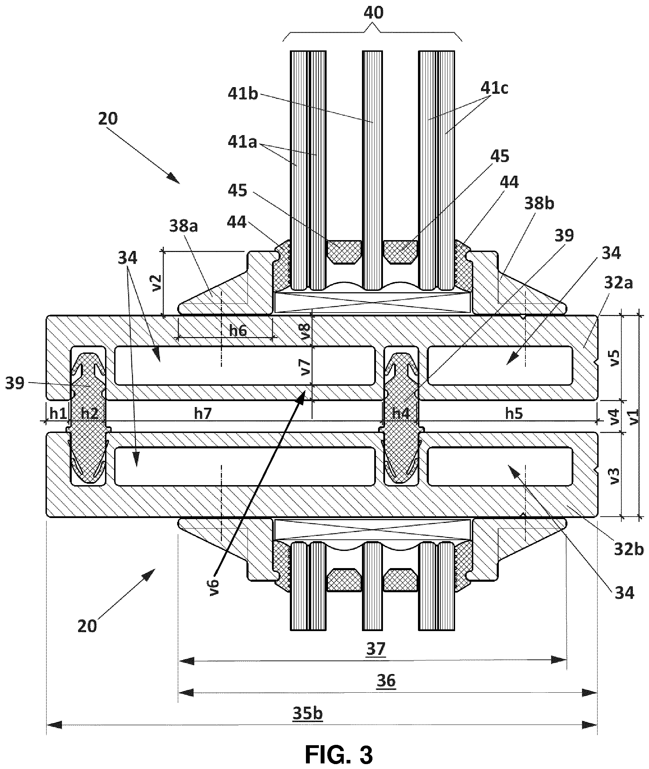

Figure 3 partially shows a cross-section of a curtain wall system according to another embodiment.

The curtain wall system has a plurality of curtain walls 20 assembled. In Figure 3 there are partially shown a first framing member 32a of a first curtain wall 20 and a second framing member 32b of a second curtain wall 20 that are assembled by means of a plurality of assembling elements 39. Preferably, the assembly of the framing members 32a-32b with the assembling elements 39 is hermetic. The first and the second framing members 32a-32b are vertical framing members of the frames of the curtain walls 20. The first and the second curtain walls 20 are adjacent in a row of curtain walls 20 of the curtain wall system.

Each framing member 32a-32b comprises a plurality of voids 34, and first and second supporting elements 38a, 38b between which glass 40 is provided, for instance as described above with reference to Figure 2.

In the example of Figure 3 the dimensions of the framing members 31a-31b are as indicated above with reference to the example of Figure 2 and further: h7 = 89 mm. A depth 35b of each framing member 32a-32b is 175 mm. A length L1 (in meters) of the first and the second framing members 32a-32b is $2.0 \leq L1 \leq 6.0$ meters when a thermal transmission coefficient U of the glass is $0.6 \leq U1 \leq 1.9$ W/m$^2$K.

A length L2 (in meters) of the horizontal framing members (not illustrated) of the frames of the curtain walls 20 is as shown in the next table based on the thermal transmission coefficient U of the glass:

| Thermal transmission coefficient U [W/m$^2$K] of the glass | Length L2 [m] of transoms |
|---|---|
| $0.6 \leq U \leq 1.1$ | $1.0 \leq L2 \leq 3.0$ |
| $1.1 < U \leq 1.9$ | $1.25 \leq L2 \leq 3.0$ |

The depth and the width of the horizontal framing members are as indicated above with reference to the first and second framing members 32a-32b.

Preferably, in some examples in which the framing members are the framing members 32a-32b illustrated in Figure 3, the lengths L1 and L2 are selected such as follows:

| Thermal transmission coefficient U [W/m$^2$K] of the glass | Length L1 [m] of mullions | Length L2 [m] of transoms |
|---|---|---|
| $0.6 \leq U \leq 1.1$ | $2.0 \leq L1 \leq 6.0$ | $1.0 \leq L2 \leq 3.0$ |
| $1.1 < U \leq 1.9$ | $2.0 \leq L1 \leq 6.0$ | $1.75 \leq L2 \leq 3.0$ |
| | $3.0 \leq L1 \leq 6.0$ | $1.25 \leq L2 \leq 3.0$ |

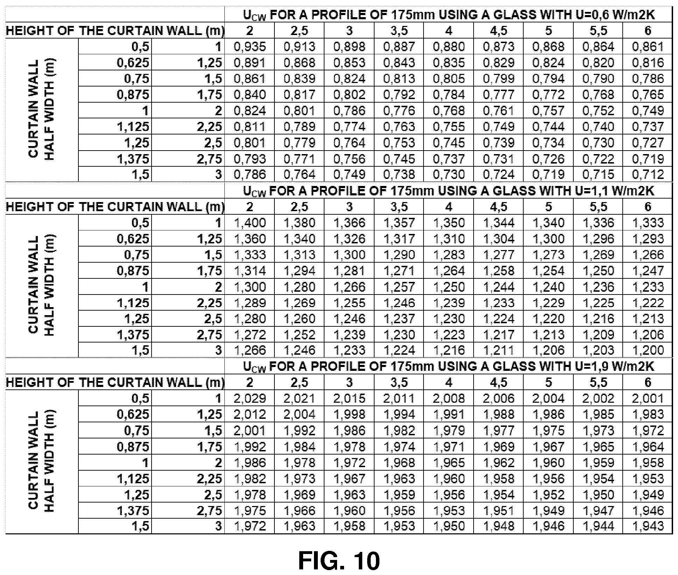

Therefore, in these examples the frames and the curtain walls may have an area ranging from 2.0x1.0 m$^2$ to 6.0x3.0 m$^2$ (both endpoints being included), the dimensions corresponding to height and width, respectively. These dimensions are based on the results indicated in Figures 7 and 10. The maximum dimensions are, however, dependent upon the composition of the framing members as set out below with reference to Figures 5-8.

A width 37 of the glass 40 together with the supporting elements 38 is less than the depth 35b, and may be adjusted according to the desired curtain wall, for instance based on the number of glass panes 41a-41c of the glass 40 and the thickness thereof, and a thickness of the first and second supporting elements 38a-38b and/or the spacers 45. Further, a distance 36 between a first end of the first supporting element 38a and a first end of the curtain wall is equal to or greater than the width 37, and less than the depth 35b. It is readily apparent for the skilled person that other embodiments in which the glass 40 is positioned closer to the first end also fall within the scope of the present disclosure.

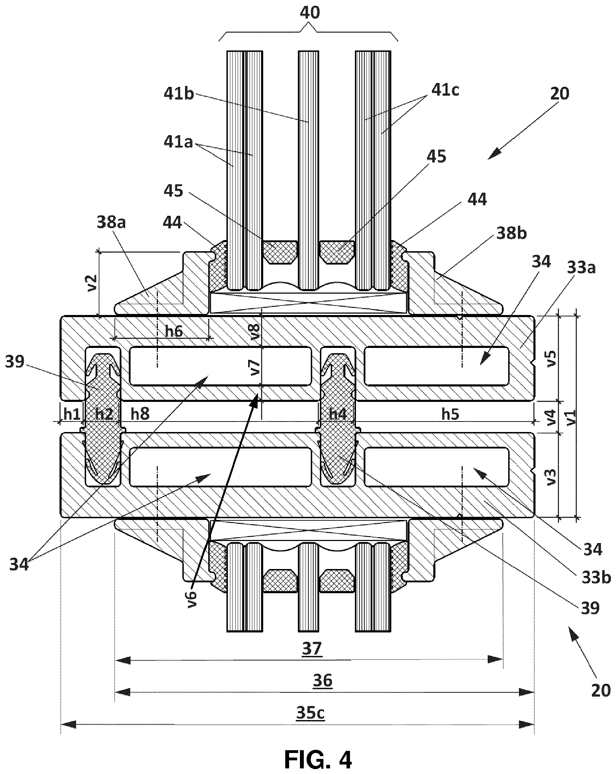

Figure 4 partially shows a cross-section of a curtain wall system according to another embodiment.

The curtain wall system has a plurality of curtain walls 20 assembled. In Figure 4 there are partially shown a first framing member 33a of a first curtain wall 20 and a second framing member 33b of a second curtain wall 20 that are assembled by means of a plurality of assembling elements 39. Preferably, the assembly of the framing members 33a-33b with the assembling elements 39 is hermetic. The first and the second framing members 33a-33b are vertical framing members of the frames of the curtain walls 20. The first and the second curtain walls 20 are adjacent in a row of curtain walls 20 of the curtain wall system.

Each framing member 33a-33b comprises a plurality of voids 34, and first and second supporting elements 38a, 38b between which glass 40 is provided, for instance as described above with reference to Figure 2.

In the example of Figure 4 the dimensions of the framing members 33a-33b are as indicated above with reference to the example of Figure 2 and further: h8 = 64 mm. A depth 35c of each framing member 33a-33b is 150 mm. A length L1 (in meters) of the first and the second framing members 33a-33b is as shown in the next table based on a thermal transmission coefficient U of the glass:

| Thermal transmission coefficient U [W/m²K] of the glass | Length L1 [m] of mullions |
|---|---|
| $0.6 \leq U \leq 1.1$ | $2.0 \leq L1 \leq 6.0$ |
| $1.1 < U \leq 1.9$ | $3.0 \leq L1 \leq 6.0$ |

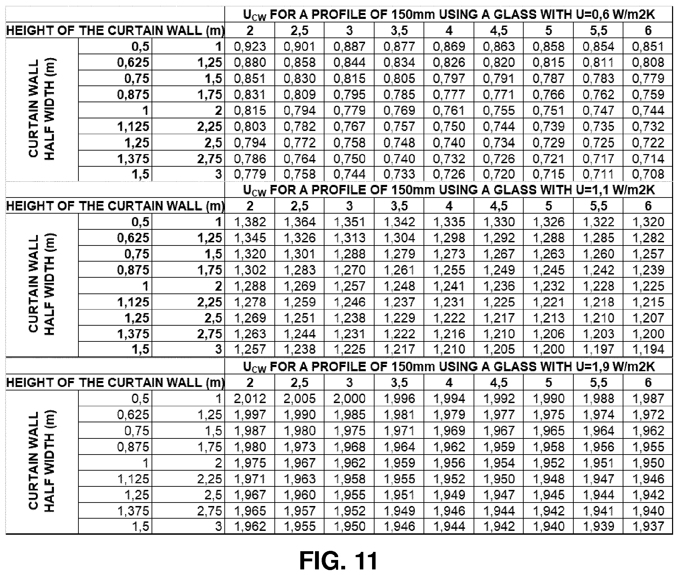

A length L2 (in meters) of the horizontal framing members (not illustrated) of the frames of the curtain walls 20 is $1.0 \leq L2 \leq 3.0$ meters when the thermal transmission coefficient U of the glass panes is $0.6 \leq U \leq 1.9$ W/m²K. Therefore, in examples in which the framing members are the framing members 33a-33b illustrated in Figure 4, the frames and the curtain walls may have an area ranging from 2.0x1.0 m² to 6.0x3.0 m² (both endpoints being included), the dimensions corresponding to height and width, respectively. These dimensions are based on the results indicated in Figures 8 and 11. The maximum dimensions are, however, dependent upon the composition of the framing members as set out below with reference to Figures 5-8.

A width 37 of the glass 40 together with the supporting elements 38 is less than the depth 35c, and may be adjusted according to the desired curtain wall, for instance based on the number of glass panes 41a-41c of the glass 40 and the thickness thereof, and a thickness of the first and second supporting elements 38a-38b and/or the spacers 45. Further, a distance 36 between a first end of the first supporting element 38a and a first end of the curtain wall is equal to or greater than the width 37, and less than the depth 35c.

Figure 5 shows a table with the elastic modulus of framing members of curtain walls obtained according to Examples 2 and 3 above. The elastic modulus of the framing members was determined according to the standard ASTM D3039 / ISO527-4.

These elastic moduli are used for determining preferred maximum dimensions of curtain walls based on the loads to be supported by the curtain walls, these mainly being wind load and dead weight.

The mechanical values confirm the feasibility of the curtain walls based on the method of standard EN 13830:2015 for performing a wind test taking into account requirements of the final place and building characteristics where the curtain wall is to be used. In this sense, to define the final loads to be supported by the curtain walls national construction technical codes or the Eurocodes, and specifically the Eurocode 1: Actions in structures EN 1991-1-4:2005 wind actions, are taken into account.

The computations with regards to load to be supported of Figures 6-8, and to thermal behavior of Figures 9-11, use the same geometries. It has been checked that the structural behavior is limited by the deformation, thus the computations are based on Serviceability Limit State (SLS) so as to determine the maximum dimensions of spans and the wind load. According to EN-13830:2015, the maximum deflection considered for wind loads is L/200 or 15mm, L being a length of the horizontal or the vertical framing member measured between the points of support. For the charge coefficient, pinned constraints have been considered as they are more unfavorable in respect of deflection than fixed constraints.

Based on minimum requirements defined by national technical construction codes and the Eurocode 1, curtains walls shall at least support wind loads of 500 Pa using also as reference what is defined in EN 12210:2000 "Curtain walls - Resistance to wind - Classification".

Figure 6 shows a table indicating maximum wind loads supported by framing members of curtain walls according to an embodiment; the framing members have a depth of 200 mm.

The table indicates the maximum wind loads for each of the two exemplary compositions of Figure 5, and according to a height between supports (ranging from 3 to 5 meters), the supports generally being the slabs of a building, and a width of the unit (ranging from 1 to 3 meters).

For the first exemplary composition, it is determined that maximum dimensions of the curtain wall, if the curtain wall shall support at least a wind load of 500 Pa, may be one of the following: 5.0x1.0 m²; 4.5x2.0 m²; or 4.0x3.0 m², the dimensions being height times width, respectively.

For the second exemplary composition, it is determined that maximum dimensions of the curtain wall, if the curtain wall shall support at least a wind load of 500 Pa, may be one of the following: 5.0x1.0 m²; 5.0x2.0 m²; or 5.0x3.0 m², the dimensions being height times width, respectively.

Figure 7 shows a table indicating maximum wind loads supported by framing members of curtain walls according to an embodiment; the framing members have a depth of 175 mm.

The table indicates the maximum wind loads for each of the two exemplary compositions of Figure 5, and according to a height between supports (ranging from 3 to 5 meters) and a width of the unit (ranging from 1 to 3 meters).

For the first exemplary composition, it is determined that maximum dimensions of the curtain wall, if the curtain wall shall support at least a wind load of 500 Pa, may be one of the following: 5.0x1.0 m²; 4.0x2.0 m²; or 3.5x3.0 m², the dimensions being height times width, respectively.

For the second exemplary composition, it is determined that maximum dimensions of the curtain wall, if the curtain wall shall support at least a wind load of 500 Pa, may be one of the following: 5.0x1.0 m$^2$; 5.0x2.0 m$^2$; or 5.0x3.0 m$^2$, the dimensions being height times width, respectively.

Figure 8 shows a table indicating maximum wind loads supported by framing members of curtain walls according to an embodiment; the framing members have a depth of 150 mm.

The table indicates the maximum wind loads for each of the two exemplary compositions of Figure 5, and according to a height between supports (ranging from 3 to 5 meters) and a width of the unit (ranging from 1 to 3 meters).

For the first exemplary composition, it is determined that maximum dimensions of the curtain wall, if the curtain wall shall support at least a wind load of 500 Pa, may be one of the following: 4.5x1.0 m$^2$; 3.5x2.0 m$^2$; or 3.0x3.0 m$^2$, the dimensions being height times width, respectively.

For the second exemplary composition, it is determined that maximum dimensions of the curtain wall, if the curtain wall shall support at least a wind load of 500 Pa, may be one of the following: 5.0x1.0 m$^2$; 5.0x2.0 m$^2$; or 4.5x3.0 m$^2$, the dimensions being height times width, respectively.

Figures 9-11 show thermal transmission coefficients of curtain walls according to embodiments. For establishing the thermal behavior of the curtain walls the total thermal transmission $U_{cw}$ of the curtain wall is to be computed according to the following equation of "Simplified assessment method" of EN 12631:2015:

$$U_{cw} = \frac{\sum A_g \times U_g + \sum A_{TJ} x U_{TJ}}{A_{cw}}$$

wherein $A_g$ is the area of the glass, $U_g$ is the thermal transmission coefficient of the glass, $A_{TJ}$ is the area of the thermal joint of the union between two filling elements, $U_{TJ}$ is the thermal transmission coefficient of the thermal joint, and $A_{cw}$ is the area of the curtain wall. The values for $U_{TJ,mullion}$ and $U_{TJ,transom}$ have been obtained according to EN 12631:2015, the values for thermal fluxes $\Phi_{TJ,mullion}$ and $\Phi_{TJ,transom}$ have been obtained via computer finite element analysis according to EN 10211:2007 and EN 10077-2:2012, and the $U_{glass}$ values have been obtained with calculation software according to EN 673:2011.

The thermal requirements for a specific building and place are defined by the national construction technical codes. Taking into account the requirements defined for this type of facades and based on the place where the curtain wall is going to be placed it is established that a $U_{cw}$ value between 0.7 and 2.0 W/m$^2$K (both endpoints being included) may fulfill the necessary requirements.

Since the thermal characteristics of the material based on its fibers composition are not relevant, same conditions have been used for all the computations, and thus the thermal conductivity of the material considered in the computations is λ=0.2 (W/mK). In what regards the glass, three different types of glass have been considered: with U=0.6 (W/m$^2$K), with U=1.1 (W/m$^2$K), and with U=1.9 (W/m$^2$K).

The tables of Figures 9-11 show the total thermal transmission $U_{cw}$ of curtain walls featuring a depth of 200 mm, 175 mm and 150 mm, respectively.

The total thermal transmission U is indicated according to: the width of the curtain wall (ranging from 1 to 3 meters), the height of the same (ranging from 2 to 6 meters), and the thermal transmission coefficient U of the glass.

In this text, the terms "framing profile" and "framing member" have been interchangeably used to refer to the same element.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. Framing profile suitable for manufacturing a curtain wall (20) and for supporting one or more glass panes of a curtain wall (20), wherein the framing profile is made of reinforced thermosetting resin composite, wherein said reinforced thermosetting resin composite comprises:

   (a) 20 to 80 wt% in respect of the total weight of the composite of a thermoset resin matrix; and

(b) 20 to 80 wt% in respect of the total weight of the composite of a fiber reinforcement,

wherein said fiber reinforcement comprises

10 to 20 wt% in respect of the total weight of the fiber reinforcement of natural fibers and
80 to 90 wt% in respect of the total weight of the fiber reinforcement of high performance fibers selected from the group of glass fibers, ceramic fibers, carbon fibers, boron fibers, organic polymer fibers and mixtures thereof.

2. Framing profile according to claim 1, wherein the thermoset resin of the thermoset resin matrix is selected from the group of unsaturated polyester resins, epoxy resins, vinyl ester resins, polyurethanes, phenolic resins, furan resins and mixtures thereof, preferably from polyester resins and epoxy resins, more preferably from bioepoxy resins.

3. Framing profile according to claim 1 or 2, wherein the natural fibers are flax fibers and the high performance fibers are glass fibers.

4. Framing profile according to claim 3 wherein the yarns of flax fibers are between 1 and 5 and/or the yarns of glass fibers are between 5 and 19.

5. Framing profile according to any one of claims 1 to 4, wherein said reinforced thermosetting resin composite comprises:

(a) 20 to 80 wt% in respect of the total weight of the composite of a thermoset resin matrix, comprising an epoxy resin, preferably a bioepoxy resin or a polyester resin; and
(b) 20 to 80 wt% in respect of the total weight of the composite of a fiber reinforcement,

wherein said fiber reinforcement comprises

16 to 20 wt% in respect of the total weight of the fiber reinforcement of flax fibers consisting of 4 to 1 yarns, and
80 to 84 wt% in respect of the total weight of the fiber reinforcement of glass fibers consisting of 5 to 19 yarns.

6. Framing profile according to any one of claims 1 to 5, wherein said reinforced thermosetting resin composite comprises:

(a) 30 to 70 wt% in respect of the total weight of the composite of a thermoset resin matrix, comprising an epoxy resin, preferably a bioepoxy resin or a polyester resin; and
(b) 30 to 70 wt% in respect of the total weight of the composite of a fiber reinforcement,

wherein said fiber reinforcement comprises

16 to 20 wt% in respect of the total weight of the fiber reinforcement of flax fibers consisting of 4 to 1 yarns, and
80 to 84 wt% in respect of the total weight of the fiber reinforcement of glass fibers consisting of 7 to 17 yarns.

7. Framing profile according to any one of claims 1 to 6, wherein said reinforced thermosetting resin composite comprises:

(a) 40 to 60 wt% in respect of the total weight of the composite of a thermoset resin matrix, comprising an epoxy resin, preferably a bioepoxy resin or a polyester resin; and
(b) 40 to 60 wt% in respect of the total weight of the composite of a fiber reinforcement,

wherein said fiber reinforcement comprises

16 to 20 wt% in respect of the total weight of the fiber reinforcement of flax fibers consisting of 2 to 3 yarns, and
80 to 84 wt% in respect of the total weight of the fiber reinforcement of glass fibers consisting of 9 to 15 yarns.

8. Framing profile according to any one of claims 1 to 7, wherein said reinforced thermosetting resin composite comprises:

(a) 50 wt% in respect of the total weight of the composite of a thermoset resin matrix, comprising an epoxy resin, preferably a bioepoxy resin or a polyester resin; and
(b) 50 wt% in respect of the total weight of the composite of a fiber reinforcement,

wherein said fiber reinforcement comprises

16 to 20 wt% in respect of the total weight of the fiber reinforcement of flax fibers consisting of 2 to 3 yarns, and
80 to 84 wt% in respect of the total weight of the fiber reinforcement of glass fibers consisting of 11 to 13 yarns.

9. Framing profile according to any one of previous claims, wherein the glass fibers of 4800 tex and density of 2.55 g/cm3 and flax fibers of 2000 tex and density of 1.45 g/cm3.

10. A continuous pultrusion process for manufacturing the framing profile of any one of previous claims, which comprises the steps of:

(I) impregnating a fiber reinforcement with a resin mix composition comprising a resin and at least one cross-linking agent;
(II) preforming the impregnated fibers as the profile to be obtained,
(III) curing the profile preform from previous step (II).

11. Use of the framing profile according to any one of claims 1 to 9, for manufacturing a curtain wall.

12. Curtain wall (20) comprising framing profiles according to any one of claims 1 to 9.

13. Curtain wall (20) according to claim 12, further comprising glass having a thermal transmission coefficient U; wherein the framing profiles comprise two horizontal framing profiles and two vertical framing profiles that surround and support the glass; and wherein:

a depth of the framing profiles is greater than or equal to 150 mm and less than or equal to 200 mm;
the thermal transmission coefficient U is $0.6 \leq U \leq 1.1$;
a length L1 of the two vertical framing profiles is $2.0 \leq L1 \leq 6.0$ m; and
a length L2 of the two horizontal framing profiles is $1.0 \leq L2 \leq 3.0$ m.

14. Curtain wall (20) according to claim 12, further comprising glass having a thermal transmission coefficient U; wherein the framing profiles comprise two horizontal framing profiles and two vertical framing profiles that surround and support the glass; and wherein:

a depth of the framing profiles is greater than or equal to 150 mm and less than or equal to 200 mm;
the thermal transmission coefficient U is $1.1 < U \leq 1.9$;
a length L1 of the two vertical framing profiles is $2.5 \leq L1 \leq 6.0$; and
a length L2 of the two horizontal framing profiles is $1.75 \leq L2 \leq 3.0$ m.

15. Curtain wall (20) according to claim 12, further comprising glass having a thermal transmission coefficient U; wherein the framing profiles comprise two horizontal framing profiles and two vertical framing profiles that surround and support the glass; and wherein:

a depth of the framing profiles is greater than or equal to 150 mm and less than or equal to 175 mm;
the thermal transmission coefficient U is $1.1 < U \leq 1.9$;
a length L1 of the two vertical framing profiles is $3.0 \leq L1 \leq 6.0$; and
a length L2 of the two horizontal framing profiles is $1.25 \leq L2 \leq 3.0$ m.

**Patentansprüche**

1. Rahmenprofil, das zur Herstellung einer Vorhangfassade (20) und zum Stützen einer oder mehrerer Glasscheiben einer Vorhangfassade (20) geeignet ist, wobei das Rahmenprofil aus verstärktem duroplastischem Harzverbundwerkstoff besteht, wobei der verstärkte duroplastische Harzverbundwerkstoff Folgendes umfasst:

(a) 20 bis 80 Gew.-%, bezogen auf das Gesamtgewicht des Verbundwerkstoffs aus duroplastischer Harzmatrix;

und

(b) 20 bis 80 Gew.-%, bezogen auf das Gesamtgewicht des Verbundwerkstoffs einer Faserverstärkung, wobei die Faserverstärkung umfasst

10 bis 20 Gew.-%, bezogen auf das Gesamtgewicht der Faserverstärkung aus Naturfasern und
80 bis 90 Gew.-%, bezogen auf das Gesamtgewicht der Faserverstärkung aus Hochleistungsfasern ausgewählt aus der Gruppe umfassend Glasfasern, Keramikfasern, Kohlenstofffasern, Borfasern, organische Polymerfasern und Mischungen davon.

2. Rahmenprofil nach Anspruch 1, wobei das duroplastische Harz der duroplastischen Harzmatrix ausgewählt ist aus der Gruppe umfassend ungesättigte Polyesterharze, Epoxidharze, Vinylesterharze, Polyurethane, Phenolharze, Furanharze und Mischungen davon, bevorzugt aus Polyesterharzen und Epoxidharzen, besonders bevorzugt aus Bioepoxidharzen.

3. Rahmenprofil nach Anspruch 1 oder 2, wobei die Naturfasern Flachsfasern und die Hochleistungsfasern Glasfasern sind.

4. Rahmenprofil nach Anspruch 3, wobei die Garne aus Flachsfasern zwischen 1 und 5 und/oder die Garne aus Glasfasern zwischen 5 und 19 liegen.

5. Rahmenprofil nach einem der Ansprüche 1 bis 4, wobei der verstärkte duroplastische Harzverbundwerkstoff Folgendes umfasst:

(a) 20 bis 80 Gew.-%, bezogen auf das Gesamtgewicht des Verbundwerkstoffs aus duroplastischer Harzmatrix, umfassend ein Epoxidharz, bevorzugt ein Bioepoxidharz oder ein Polyesterharz; und
(b) 20 bis 80 Gew.-%, bezogen auf das Gesamtgewicht des Verbundwerkstoffs einer Faserverstärkung,

wobei die Faserverstärkung umfasst

16 bis 20 Gew.-%, bezogen auf das Gesamtgewicht der Faserverstärkung aus Flachsfasern, bestehend aus 4 bis 1 Garnen, und
80 bis 84 Gew.-%, bezogen auf das Gesamtgewicht der Faserverstärkung aus Glasfasern, bestehend aus 5 bis 19 Garnen.

6. Rahmenprofil nach einem der Ansprüche 1 bis 5, wobei der verstärkte duroplastische Harzverbundwerkstoff Folgendes umfasst:

(a) 30 bis 70 Gew.-%, bezogen auf das Gesamtgewicht des Verbundwerkstoffs aus duroplastischer Harzmatrix, umfassend ein Epoxidharz, bevorzugt ein Bioepoxidharz oder ein Polyesterharz; und
(b) 30 bis 70 Gew.-%, bezogen auf das Gesamtgewicht des Verbundwerkstoffs einer Faserverstärkung,

wobei die Faserverstärkung umfasst

16 bis 20 Gew.-%, bezogen auf das Gesamtgewicht der Faserverstärkung aus Flachsfasern, bestehend aus 4 bis 1 Garnen, und
80 bis 84 Gew.-%, bezogen auf das Gesamtgewicht der Faserverstärkung aus Glasfasern, bestehend aus 7 bis 17 Garnen.

7. Rahmenprofil nach einem der Ansprüche 1 bis 6, wobei der verstärkte duroplastische Harzverbundwerkstoff Folgendes umfasst:

(a) 40 bis 60 Gew.-%, bezogen auf das Gesamtgewicht des Verbundwerkstoffs aus duroplastischer Harzmatrix, umfassend ein Epoxidharz, bevorzugt ein Bioepoxidharz oder ein Polyesterharz; und
(b) 40 bis 60 Gew.-%, bezogen auf das Gesamtgewicht des Verbundwerkstoffs einer Faserverstärkung,

wobei die Faserverstärkung umfasst

16 bis 20 Gew.-%, bezogen auf das Gesamtgewicht der Faserverstärkung aus Flachsfasern, bestehend aus 2 bis 3 Garnen, und
80 bis 84 Gew.-%, bezogen auf das Gesamtgewicht der Faserverstärkung aus Glasfasern, bestehend aus 9 bis 15 Garnen.

8.  Rahmenprofil nach einem der Ansprüche 1 bis 7, wobei der verstärkte duroplastische Harzverbundwerkstoff Folgendes umfasst:

(a) 50 Gew.-%, bezogen auf das Gesamtgewicht des Verbundwerkstoffs aus duroplastischer Harzmatrix, umfassend ein Epoxidharz, bevorzugt ein Bioepoxidharz oder ein Polyesterharz; und
(b) 50 Gew.-%, bezogen auf das Gesamtgewicht des Verbundwerkstoffs einer Faserverstärkung,

wobei die Faserverstärkung umfasst

16 bis 20 Gew.-%, bezogen auf das Gesamtgewicht der Faserverstärkung aus Flachsfasern, bestehend aus 2 bis 3 Garnen, und
80 bis 84 Gew.-%, bezogen auf das Gesamtgewicht der Faserverstärkung aus Glasfasern, bestehend aus 11 bis 13 Garnen.

9.  Rahmenprofil nach einem der vorhergehenden Ansprüche, wobei die Glasfasern 4800 tex und eine Dichte von 2,55 g/cm3 und die Flachsfasern 2000 tex und eine Dichte von 1,45 g/cm3 aufweisen.

10. Ein kontinuierlicher Pultrusionsprozess zur Herstellung des Rahmenprofils nach einem der vorhergehenden Ansprüche, der die folgenden Schritte umfasst:

(I) Imprägnieren einer Faserverstärkung mit einem Harzgemisch, das ein Harz und mindestens ein Vernetzungsmittel umfasst;
(II) Vorformen der imprägnierten Fasern zu dem zu erhaltenden Profil,
(III) Aushärten des Profilvorformlings aus dem vorhergehenden Schritt (II).

11. Verwendung des Rahmenprofils nach einem der Ansprüche 1 bis 9 zur Herstellung einer Vorhangfassade.

12. Vorhangfassade (20) umfassend Rahmenprofile nach einem der Ansprüche 1 bis 9.

13. Vorhangfassade (20) nach Anspruch 12, weiterhin umfassend Glas mit einem Wärmedurchgangskoeffizienten U; wobei die Rahmenprofile zwei horizontale Rahmenprofile und zwei vertikale Rahmenprofile umfassen, die das Glas umgeben und stützen; und wobei:

eine Tiefe der Rahmenprofile größer oder gleich 150 mm ist und kleiner oder gleich 200 mm ist;
der Wärmedurchgangskoeffizient U $0,6 \leq U \leq 1,1$ beträgt;
eine Länge L1 der beiden vertikalen Rahmenprofile $2,0 \leq L1 \leq 6,0$ m beträgt; und
eine Länge L2 der beiden horizontalen Rahmenprofile $1,0 \leq L2 \leq 3,0$ m beträgt.

14. Vorhangfassade (20) nach Anspruch 12, weiterhin umfassend Glas mit einem Wärmedurchgangskoeffizienten U; wobei die Rahmenprofile zwei horizontale Rahmenprofile und zwei vertikale Rahmenprofile umfassen, die das Glas umgeben und stützen; und wobei:

eine Tiefe der Rahmenprofile größer oder gleich 150 mm ist und kleiner oder gleich 200 mm ist;
der Wärmedurchgangskoeffizient U $1,1 < U \leq 1,9$ beträgt;
eine Länge L1 der beiden vertikalen Rahmenprofile $2,5 \leq L1 \leq 6,0$ beträgt; und
eine Länge L2 der beiden horizontalen Rahmenprofile $1,75 \leq L2 \leq 3,0$ m beträgt.

15. Vorhangfassade (20) nach Anspruch 12, weiterhin umfassend Glas mit einem Wärmedurchgangskoeffizienten U; wobei die Rahmenprofile zwei horizontale Rahmenprofile und zwei vertikale Rahmenprofile umfassen, die das Glas umgeben und stützen; und wobei:

eine Tiefe der Rahmenprofile größer oder gleich 150 mm ist und kleiner oder gleich 175 mm ist;
der Wärmedurchgangskoeffizient U $1,1 < U \leq 1,9$ beträgt;
eine Länge L1 der beiden vertikalen Rahmenprofile $3,0 \leq L1 \leq 6,0$ beträgt; und

eine Länge L2 der beiden horizontalen Rahmenprofile 1,25≤L2≤3,0 m beträgt.

**Revendications**

1. Profilé d'encadrement convenant à la fabrication d'un mur-rideau (20) et au soutien d'un ou de plusieurs panneaux de verre d'un mur-rideau (20), le profilé d'encadrement étant constitué d'un composite de résine thermodurcissable renforcé, ledit composite de résine thermodurcissable renforcé comprenant

    (a) 20 à 80 % en poids, par rapport au poids total du composite, d'une matrice en résine thermodurcissable ; et
    (b) 20 à 80 % en poids, par rapport au poids total du composite, d'un renfort en fibres, dans lequel ledit renfort en fibres comprend

        10 à 20 % en poids, par rapport au poids total du renfort en fibres, de fibres naturelles et
        80 à 90 % en poids, par rapport au poids total du renfort en fibres, de fibres à haute performance choisies dans le groupe constitué des fibres de verre, des fibres céramiques, des fibres de carbone, des fibres de bore, des fibres de polymères organiques, et de leurs mélanges.

2. Profilé d'encadrement selon la revendication 1, dans lequel la résine thermodurcissable de la matrice en résine thermodurcissable est choisie dans le groupe constitué des résines polyester insaturées, des résines époxy, des résines de vinylester, des polyuréthanes, des résines phénoliques, des résines furaniques, et de leurs mélanges, de préférence parmi les résines polyester et les résines époxy, plus préférentiellement parmi les résines bioépoxy.

3. Profilé d'encadrement selon la revendication 1 ou 2, dans lequel les fibres naturelles sont des fibres de lin et les fibres à haute performance sont des fibres de verre.

4. Profilé d'encadrement selon la revendication 3, dans lequel les fils de fibres de lin sont compris entre 1 et 5 et/ou les fils de fibres de verre sont compris entre 5 et 19.

5. Profilé d'encadrement selon l'une quelconque des revendications 1 à 4, dans lequel ledit composite de résine thermodurcissable renforcé comprend :

    (a) 20 à 80 % en poids, par rapport au poids total du composite, d'une matrice en résine thermodurcissable, comprenant une résine époxy, de préférence une résine bioépoxy ou une résine polyester ; et
    (b) 20 à 80 % en poids, par rapport au poids total du composite, d'un renfort en fibres, dans lequel ledit renfort en fibres comprend

        16 à 20 % en poids, par rapport au poids total du renfort en fibres, de fibres de lin composées de 4 à 1 fils, et
        80 à 84 % en poids, par rapport au poids total du renfort en fibres, de fibres de verre composées de 5 à 19 fils.

6. Profilé d'encadrement selon l'une quelconque des revendications 1 à 5, dans lequel ledit composite de résine thermodurcissable renforcé comprend :

    (a) 30 à 70 % en poids, par rapport au poids total du composite, d'une matrice en résine thermodurcissable comprenant une résine époxy, de préférence une résine bioépoxy ou une résine polyester ; et
    (b) 30 à 70 % en poids, par rapport au poids total du composite, d'un renfort en fibres, dans lequel ledit renfort en fibres comprend

        16 à 20 % en poids, par rapport au poids total du renfort en fibre, de fibres de lin composées de 4 à 1 fils, et
        80 à 84 % en poids, par rapport au poids total du renfort en fibres, de fibres de verre composées de 7 à 17 fils.

7. Profilé d'encadrement selon l'une des revendications 1 à 6, dans lequel ledit composite de résine thermodurcissable renforcé comprend :

    (a) 40 à 60 % en poids, par rapport au poids total du composite, d'une matrice en résine thermodurcissable, comprenant une résine époxy, de préférence une résine bioépoxy ou une résine polyester ; et
    (b) 40 à 60 % en poids, par rapport au poids total du composite, d'un renfort en fibres, dans lequel ledit renfort en fibres comprend

16 à 20 % en poids, par rapport au poids total du renfort en fibres, de fibres de lin composées de 2 à 3 fils, et 80 à 84 % en poids, par rapport au poids total du renfort en fibres, de fibres de verre composées de 9 à 15 fils.

8. Profilé d'encadrement selon l'une quelconque des revendications 1 à 7, dans lequel ledit composite de résine thermodurcissable renforcé comprend :

(a) 50 % en poids, par rapport au poids total du composite, d'une matrice en résine thermodurcissable, comprenant une résine époxy, de préférence une résine bioépoxy ou une résine polyester ; et
(b) 50 % en poids, par rapport au poids total du composite, d'un renfort en fibres, dans lequel ledit renfort en fibres comprend

16 à 20 % en poids, par rapport au poids total du renfort en fibres, de fibres de lin composées de 2 à 3 fils, et 80 à 84 % en poids, par rapport au poids total du renfort en fibres, de fibres de verre composées de 11 à 13 fils.

9. Profilé d'encadrement selon l'une quelconque des revendications précédentes, dans lequel les fibres de verre sont de 4 800 tex et d'une densité de 2,55 g/cm$^3$ et les fibres de lin de 2 000 tex et d'une densité de 1,45 g/cm$^3$.

10. Procédé de pultrusion en continu pour la fabrication du profilé d'encadrement selon l'une quelconque des revendications précédentes, qui comprend les étapes consistant à :

(I) imprégner un renfort en fibres avec une composition de mélange de résines comprenant une résine et au moins un agent de réticulation ;
(II) préformer les fibres imprégnées comme le profilé à obtenir,
(III) durcir la préforme de profilé issue de l'étape précédente (II).

11. Utilisation du profilé d'encadrement selon l'une quelconque des revendications 1 à 9, pour la fabrication d'un mur-rideau.

12. Mur-rideau (20) comprenant des profilés d'encadrement selon l'une quelconque des revendications 1 à 9.

13. Mur-rideau (20) selon la revendication 12, comprenant en outre un vitrage ayant un coefficient de transmission thermique U ; dans lequel les profilés d'encadrement comprennent deux profilés d'encadrement horizontaux et deux profilés d'encadrement verticaux qui entourent et supportent le vitrage ; et dans lequel :

une profondeur des profilés d'encadrement est supérieure ou égale à 150 mm et inférieure ou égale à 200 mm ;
le coefficient de transmission thermique U vaut $0,6 \leq U \leq 1,1$ ;
une longueur L1 des deux profilés d'encadrement verticaux vaut $2,0 \leq L1 \leq 6,0$ m ; et
une longueur L2 des deux profilés d'encadrement horizontaux vaut $1,0 \leq L2 \leq 3,0$ m.

14. Mur-rideau (20) selon la revendication 12, comprenant en outre un vitrage ayant un coefficient de transmission thermique U ; dans lequel les profilés d'encadrement comprenant deux profilés d'encadrement horizontaux et deux profilés d'encadrement verticaux qui entourent et supportent le vitrage ; et dans lequel :

une profondeur des profilés d'encadrement est supérieure ou égale à 150 mm et inférieure ou égale à 200 mm ;
le coefficient de transmission thermique U vaut $1,1 \leq U \leq 1,9$ ;
une longueur L1 des deux profilés d'encadrement verticaux vaut $2,5 \leq L1 \leq 6,0$ ; et
une longueur L2 des deux profilés d'encadrement horizontaux vaut $1,75 \leq L2 \leq 3,0$ m.

15. Mur-rideau (20) selon la revendication 12, comprenant en outre un vitrage ayant un coefficient de transmission thermique U ; dans lequel les profilés d'encadrement comprennent deux profilés d'encadrement horizontaux et deux profilés d'encadrement verticaux qui entourent et supportent le vitrage ; et dans lequel :

une profondeur des profilés d'encadrement est supérieure ou égale à 150 mm et inférieure ou égale à 175 mm ;
le coefficient de transmission thermique U vaut $1,1 \leq U \leq 1,9$ ;
une longueur L1 des deux profilés d'encadrement verticaux vaut $3,0 \leq L1 \leq 6,0$ ; et
une longueur L2 des deux profilés d'encadrement horizontaux vaut $1,25 \leq L2 \leq 3,0$ m.

**FIG. 1**

**FIG. 2**

FIG. 3

FIG. 4

| MODULUS OF ELASTICITY (E) ACCORDING TO MATERIAL COMPOSITION | | | | |
|---|---|---|---|---|
| | FIBERGLASS CONTENT (%) | FLAX FIBER CONTENT (%) | RESIN CONTENT (%) | E (MPa) |
| MINIMUM CONTENT | 16 | 4 | 80 | 19284 |
| MAXIMUM CONTENT | 65 | 15 | 20 | 69096 |

# FIG. 5

| 200 mm DEPTH MULLION | | | | | | |
|---|---|---|---|---|---|---|
| MAXIMUM WIND PRESSURE (Pa) ACCORDING TO MATERIAL YOUNG MODULE $E_{min}$=19284 MPa $\quad$ $E_{máx}$=69096 MPa | | | | | | |
| | | MODULE WIDTH (m) | | | | |
| | | 1 | | 2 | | 3 |
| HEIGHT BETWEEN SUPPORTS (m) | 3 | $E_{min}$ | $E_{máx}$ | $E_{min}$ | $E_{máx}$ | $E_{min}$ | $E_{máx}$ |
| | | 6183 | 22156 | 3092 | 11078 | 2061 | 7385 |
| | 3,5 | $E_{min}$ | $E_{máx}$ | $E_{min}$ | $E_{máx}$ | $E_{min}$ | $E_{máx}$ |
| | | 3338 | 11959 | 1669 | 5979 | 1112 | 3986 |
| | 4 | $E_{min}$ | $E_{máx}$ | $E_{min}$ | $E_{máx}$ | $E_{min}$ | $E_{máx}$ |
| | | 1956 | 7010 | 978 | 3505 | 652 | 2337 |
| | 4,5 | $E_{min}$ | $E_{máx}$ | $E_{min}$ | $E_{máx}$ | $E_{min}$ | $E_{máx}$ |
| | | 1221 | 4376 | 610 | 2188 | 407 | 1459 |
| | 5 | $E_{min}$ | $E_{máx}$ | $E_{min}$ | $E_{máx}$ | $E_{min}$ | $E_{máx}$ |
| | | 801 | 2871 | 400 | 1435 | 267 | 957 |

# FIG. 6

| 175 mm DEPTH MULLION | | | | | | |
|---|---|---|---|---|---|---|
| MAXIMUM WIND PRESSURE (Pa) ACCORDING TO MATERIAL YOUNG MODULE $E_{min}$=19284 MPa $\quad$ $E_{máx}$=69096 MPa | | | | | | |
| | | MODULE WIDTH (m) | | | | |
| | | 1 | | 2 | | 3 |
| HEIGHT BETWEEN SUPPORTS (m) | 3 | $E_{min}$ | $E_{máx}$ | $E_{min}$ | $E_{máx}$ | $E_{min}$ | $E_{máx}$ |
| | | 4208 | 15077 | 2104 | 7538 | 1402 | 5026 |
| | 3,5 | $E_{min}$ | $E_{máx}$ | $E_{min}$ | $E_{máx}$ | $E_{min}$ | $E_{máx}$ |
| | | 2271 | 8138 | 1135 | 4069 | 757 | 2713 |
| | 4 | $E_{min}$ | $E_{máx}$ | $E_{min}$ | $E_{máx}$ | $E_{min}$ | $E_{máx}$ |
| | | 1331 | 4770 | 665 | 2385 | 444 | 1590 |
| | 4,5 | $E_{min}$ | $E_{máx}$ | $E_{min}$ | $E_{máx}$ | $E_{min}$ | $E_{máx}$ |
| | | 831 | 2978 | 415 | 1489 | 277 | 993 |
| | 5 | $E_{min}$ | $E_{máx}$ | $E_{min}$ | $E_{máx}$ | $E_{min}$ | $E_{máx}$ |
| | | 545 | 1954 | 272 | 977 | 182 | 651 |

# FIG. 7

## 150 mm DEPTH MULLION

MAXIMUM WIND PRESSURE (Pa) ACCORDING TO MATERIAL YOUNG MODULE
$E_{min}$=19284 MPa          $E_{max}$=69096 MPa

| | | MODULE WIDTH (m) | | | | | |
|---|---|---|---|---|---|---|---|
| | | 1 | | 2 | | 3 | |
| | | $E_{min}$ | $E_{max}$ | $E_{min}$ | $E_{max}$ | $E_{min}$ | $E_{max}$ |
| HEIGHT BETWEEN SUPPORTS (m) | 3 | 2703 | 9687 | 1351 | 4843 | 901 | 3229 |
| | 3,5 | 1459 | 5229 | 729 | 2614 | 486 | 1743 |
| | 4 | 855 | 3065 | 427 | 1532 | 285 | 1021 |
| | 4,5 | 534 | 1913 | 267 | 957 | 178 | 638 |
| | 5 | 350 | 1255 | 175 | 627 | 116 | 418 |

**FIG. 8**

| | | $U_{CW}$ FOR A PROFILE OF 200mm USING A GLASS WITH U=0,6 W/m2K | | | | | | | | |
|---|---|---|---|---|---|---|---|---|---|---|
| HEIGHT OF THE CURTAIN WALL (m) | | 2 | 2,5 | 3 | 3,5 | 4 | 4,5 | 5 | 5,5 | 6 |
| CURTAIN WALL HALF WIDTH (m) | 0,5 | 1 | 0,946 | 0,923 | 0,908 | 0,897 | 0,889 | 0,882 | 0,877 | 0,873 | 0,869 |
| | 0,625 | 1,25 | 0,900 | 0,877 | 0,862 | 0,851 | 0,842 | 0,836 | 0,831 | 0,827 | 0,823 |
| | 0,75 | 1,5 | 0,869 | 0,846 | 0,831 | 0,820 | 0,812 | 0,805 | 0,800 | 0,796 | 0,792 |
| | 0,875 | 1,75 | 0,847 | 0,824 | 0,809 | 0,798 | 0,790 | 0,783 | 0,778 | 0,774 | 0,770 |
| | 1 | 2 | 0,831 | 0,808 | 0,792 | 0,781 | 0,773 | 0,767 | 0,762 | 0,757 | 0,754 |
| | 1,125 | 2,25 | 0,818 | 0,795 | 0,780 | 0,769 | 0,760 | 0,754 | 0,749 | 0,745 | 0,741 |
| | 1,25 | 2,5 | 0,808 | 0,785 | 0,769 | 0,758 | 0,750 | 0,744 | 0,739 | 0,734 | 0,731 |
| | 1,375 | 2,75 | 0,799 | 0,776 | 0,761 | 0,750 | 0,742 | 0,735 | 0,730 | 0,726 | 0,722 |
| | 1,5 | 3 | 0,792 | 0,769 | 0,754 | 0,743 | 0,735 | 0,728 | 0,723 | 0,719 | 0,715 |

| | | $U_{CW}$ FOR A PROFILE OF 200mm USING A GLASS WITH U=1,1 W/m2K | | | | | | | | |
|---|---|---|---|---|---|---|---|---|---|---|
| HEIGHT OF THE CURTAIN WALL (m) | | 2 | 2,5 | 3 | 3,5 | 4 | 4,5 | 5 | 5,5 | 6 |
| CURTAIN WALL HALF WIDTH (m) | 0,5 | 1 | 1,417 | 1,396 | 1,381 | 1,371 | 1,364 | 1,358 | 1,353 | 1,350 | 1,346 |
| | 0,625 | 1,25 | 1,374 | 1,353 | 1,339 | 1,329 | 1,322 | 1,316 | 1,311 | 1,307 | 1,304 |
| | 0,75 | 1,5 | 1,346 | 1,325 | 1,311 | 1,301 | 1,294 | 1,288 | 1,283 | 1,279 | 1,276 |
| | 0,875 | 1,75 | 1,326 | 1,305 | 1,291 | 1,281 | 1,273 | 1,268 | 1,263 | 1,259 | 1,256 |
| | 1 | 2 | 1,311 | 1,290 | 1,276 | 1,266 | 1,258 | 1,252 | 1,248 | 1,244 | 1,241 |
| | 1,125 | 2,25 | 1,299 | 1,278 | 1,264 | 1,254 | 1,247 | 1,241 | 1,236 | 1,232 | 1,229 |
| | 1,25 | 2,5 | 1,290 | 1,269 | 1,255 | 1,245 | 1,237 | 1,231 | 1,227 | 1,223 | 1,220 |
| | 1,375 | 2,75 | 1,282 | 1,261 | 1,247 | 1,237 | 1,230 | 1,224 | 1,219 | 1,215 | 1,212 |
| | 1,5 | 3 | 1,276 | 1,255 | 1,241 | 1,231 | 1,223 | 1,217 | 1,213 | 1,209 | 1,206 |

| | | $U_{CW}$ FOR A PROFILE OF 200mm USING A GLASS WITH U=1,9 W/m2K | | | | | | | | |
|---|---|---|---|---|---|---|---|---|---|---|
| HEIGHT OF THE CURTAIN WALL (m) | | 2 | 2,5 | 3 | 3,5 | 4 | 4,5 | 5 | 5,5 | 6 |
| CURTAIN WALL HALF WIDTH (m) | 0,5 | 1 | 2,048 | 2,038 | 2,032 | 2,027 | 2,024 | 2,021 | 2,019 | 2,017 | 2,015 |
| | 0,625 | 1,25 | 2,028 | 2,019 | 2,012 | 2,007 | 2,004 | 2,001 | 1,999 | 1,997 | 1,996 |
| | 0,75 | 1,5 | 2,015 | 2,005 | 1,999 | 1,994 | 1,991 | 1,988 | 1,986 | 1,984 | 1,982 |
| | 0,875 | 1,75 | 2,006 | 1,996 | 1,989 | 1,985 | 1,981 | 1,978 | 1,976 | 1,974 | 1,973 |
| | 1 | 2 | 1,999 | 1,989 | 1,982 | 1,978 | 1,974 | 1,971 | 1,969 | 1,967 | 1,966 |
| | 1,125 | 2,25 | 1,993 | 1,983 | 1,977 | 1,972 | 1,969 | 1,966 | 1,964 | 1,962 | 1,960 |
| | 1,25 | 2,5 | 1,989 | 1,979 | 1,972 | 1,968 | 1,964 | 1,961 | 1,959 | 1,957 | 1,956 |
| | 1,375 | 2,75 | 1,985 | 1,975 | 1,969 | 1,964 | 1,961 | 1,958 | 1,956 | 1,954 | 1,952 |
| | 1,5 | 3 | 1,982 | 1,972 | 1,966 | 1,961 | 1,958 | 1,955 | 1,953 | 1,951 | 1,949 |

**FIG. 9**

| | | $U_{CW}$ FOR A PROFILE OF 175mm USING A GLASS WITH U=0,6 W/m2K | | | | | | | | |
|---|---|---|---|---|---|---|---|---|---|---|
| HEIGHT OF THE CURTAIN WALL (m) | | 2 | 2,5 | 3 | 3,5 | 4 | 4,5 | 5 | 5,5 | 6 |
| CURTAIN WALL HALF WIDTH (m) | 0,5 / 1 | 0,935 | 0,913 | 0,898 | 0,887 | 0,880 | 0,873 | 0,868 | 0,864 | 0,861 |
| | 0,625 / 1,25 | 0,891 | 0,868 | 0,853 | 0,843 | 0,835 | 0,829 | 0,824 | 0,820 | 0,816 |
| | 0,75 / 1,5 | 0,861 | 0,839 | 0,824 | 0,813 | 0,805 | 0,799 | 0,794 | 0,790 | 0,786 |
| | 0,875 / 1,75 | 0,840 | 0,817 | 0,802 | 0,792 | 0,784 | 0,777 | 0,772 | 0,768 | 0,765 |
| | 1 / 2 | 0,824 | 0,801 | 0,786 | 0,776 | 0,768 | 0,761 | 0,757 | 0,752 | 0,749 |
| | 1,125 / 2,25 | 0,811 | 0,789 | 0,774 | 0,763 | 0,755 | 0,749 | 0,744 | 0,740 | 0,737 |
| | 1,25 / 2,5 | 0,801 | 0,779 | 0,764 | 0,753 | 0,745 | 0,739 | 0,734 | 0,730 | 0,727 |
| | 1,375 / 2,75 | 0,793 | 0,771 | 0,756 | 0,745 | 0,737 | 0,731 | 0,726 | 0,722 | 0,719 |
| | 1,5 / 3 | 0,786 | 0,764 | 0,749 | 0,738 | 0,730 | 0,724 | 0,719 | 0,715 | 0,712 |

| | | $U_{CW}$ FOR A PROFILE OF 175mm USING A GLASS WITH U=1,1 W/m2K | | | | | | | | |
|---|---|---|---|---|---|---|---|---|---|---|
| HEIGHT OF THE CURTAIN WALL (m) | | 2 | 2,5 | 3 | 3,5 | 4 | 4,5 | 5 | 5,5 | 6 |
| CURTAIN WALL HALF WIDTH (m) | 0,5 / 1 | 1,400 | 1,380 | 1,366 | 1,357 | 1,350 | 1,344 | 1,340 | 1,336 | 1,333 |
| | 0,625 / 1,25 | 1,360 | 1,340 | 1,326 | 1,317 | 1,310 | 1,304 | 1,300 | 1,296 | 1,293 |
| | 0,75 / 1,5 | 1,333 | 1,313 | 1,300 | 1,290 | 1,283 | 1,277 | 1,273 | 1,269 | 1,266 |
| | 0,875 / 1,75 | 1,314 | 1,294 | 1,281 | 1,271 | 1,264 | 1,258 | 1,254 | 1,250 | 1,247 |
| | 1 / 2 | 1,300 | 1,280 | 1,266 | 1,257 | 1,250 | 1,244 | 1,240 | 1,236 | 1,233 |
| | 1,125 / 2,25 | 1,289 | 1,269 | 1,255 | 1,246 | 1,239 | 1,233 | 1,229 | 1,225 | 1,222 |
| | 1,25 / 2,5 | 1,280 | 1,260 | 1,246 | 1,237 | 1,230 | 1,224 | 1,220 | 1,216 | 1,213 |
| | 1,375 / 2,75 | 1,272 | 1,252 | 1,239 | 1,230 | 1,223 | 1,217 | 1,213 | 1,209 | 1,206 |
| | 1,5 / 3 | 1,266 | 1,246 | 1,233 | 1,224 | 1,216 | 1,211 | 1,206 | 1,203 | 1,200 |

| | | $U_{CW}$ FOR A PROFILE OF 175mm USING A GLASS WITH U=1,9 W/m2K | | | | | | | | |
|---|---|---|---|---|---|---|---|---|---|---|
| HEIGHT OF THE CURTAIN WALL (m) | | 2 | 2,5 | 3 | 3,5 | 4 | 4,5 | 5 | 5,5 | 6 |
| CURTAIN WALL HALF WIDTH (m) | 0,5 / 1 | 2,029 | 2,021 | 2,015 | 2,011 | 2,008 | 2,006 | 2,004 | 2,002 | 2,001 |
| | 0,625 / 1,25 | 2,012 | 2,004 | 1,998 | 1,994 | 1,991 | 1,988 | 1,986 | 1,985 | 1,983 |
| | 0,75 / 1,5 | 2,001 | 1,992 | 1,986 | 1,982 | 1,979 | 1,977 | 1,975 | 1,973 | 1,972 |
| | 0,875 / 1,75 | 1,992 | 1,984 | 1,978 | 1,974 | 1,971 | 1,969 | 1,967 | 1,965 | 1,964 |
| | 1 / 2 | 1,986 | 1,978 | 1,972 | 1,968 | 1,965 | 1,962 | 1,960 | 1,959 | 1,958 |
| | 1,125 / 2,25 | 1,982 | 1,973 | 1,967 | 1,963 | 1,960 | 1,958 | 1,956 | 1,954 | 1,953 |
| | 1,25 / 2,5 | 1,978 | 1,969 | 1,963 | 1,959 | 1,956 | 1,954 | 1,952 | 1,950 | 1,949 |
| | 1,375 / 2,75 | 1,975 | 1,966 | 1,960 | 1,956 | 1,953 | 1,951 | 1,949 | 1,947 | 1,946 |
| | 1,5 / 3 | 1,972 | 1,963 | 1,958 | 1,953 | 1,950 | 1,948 | 1,946 | 1,944 | 1,943 |

# FIG. 10

| HEIGHT OF THE CURTAIN WALL (m) | | $U_{CW}$ FOR A PROFILE OF 150mm USING A GLASS WITH U=0,6 W/m2K | | | | | | | | |
|---|---|---|---|---|---|---|---|---|---|---|
| | | 2 | 2,5 | 3 | 3,5 | 4 | 4,5 | 5 | 5,5 | 6 |
| CURTAIN WALL HALF WIDTH (m) | 0,5 | 1 | 0,923 | 0,901 | 0,887 | 0,877 | 0,869 | 0,863 | 0,858 | 0,854 | 0,851 |
| | 0,625 | 1,25 | 0,880 | 0,858 | 0,844 | 0,834 | 0,826 | 0,820 | 0,815 | 0,811 | 0,808 |
| | 0,75 | 1,5 | 0,851 | 0,830 | 0,815 | 0,805 | 0,797 | 0,791 | 0,787 | 0,783 | 0,779 |
| | 0,875 | 1,75 | 0,831 | 0,809 | 0,795 | 0,785 | 0,777 | 0,771 | 0,766 | 0,762 | 0,759 |
| | 1 | 2 | 0,815 | 0,794 | 0,779 | 0,769 | 0,761 | 0,755 | 0,751 | 0,747 | 0,744 |
| | 1,125 | 2,25 | 0,803 | 0,782 | 0,767 | 0,757 | 0,750 | 0,744 | 0,739 | 0,735 | 0,732 |
| | 1,25 | 2,5 | 0,794 | 0,772 | 0,758 | 0,748 | 0,740 | 0,734 | 0,729 | 0,725 | 0,722 |
| | 1,375 | 2,75 | 0,786 | 0,764 | 0,750 | 0,740 | 0,732 | 0,726 | 0,721 | 0,717 | 0,714 |
| | 1,5 | 3 | 0,779 | 0,758 | 0,744 | 0,733 | 0,726 | 0,720 | 0,715 | 0,711 | 0,708 |

| HEIGHT OF THE CURTAIN WALL (m) | | $U_{CW}$ FOR A PROFILE OF 150mm USING A GLASS WITH U=1,1 W/m2K | | | | | | | | |
|---|---|---|---|---|---|---|---|---|---|---|
| | | 2 | 2,5 | 3 | 3,5 | 4 | 4,5 | 5 | 5,5 | 6 |
| CURTAIN WALL HALF WIDTH (m) | 0,5 | 1 | 1,382 | 1,364 | 1,351 | 1,342 | 1,335 | 1,330 | 1,326 | 1,322 | 1,320 |
| | 0,625 | 1,25 | 1,345 | 1,326 | 1,313 | 1,304 | 1,298 | 1,292 | 1,288 | 1,285 | 1,282 |
| | 0,75 | 1,5 | 1,320 | 1,301 | 1,288 | 1,279 | 1,273 | 1,267 | 1,263 | 1,260 | 1,257 |
| | 0,875 | 1,75 | 1,302 | 1,283 | 1,270 | 1,261 | 1,255 | 1,249 | 1,245 | 1,242 | 1,239 |
| | 1 | 2 | 1,288 | 1,269 | 1,257 | 1,248 | 1,241 | 1,236 | 1,232 | 1,228 | 1,225 |
| | 1,125 | 2,25 | 1,278 | 1,259 | 1,246 | 1,237 | 1,231 | 1,225 | 1,221 | 1,218 | 1,215 |
| | 1,25 | 2,5 | 1,269 | 1,251 | 1,238 | 1,229 | 1,222 | 1,217 | 1,213 | 1,210 | 1,207 |
| | 1,375 | 2,75 | 1,263 | 1,244 | 1,231 | 1,222 | 1,216 | 1,210 | 1,206 | 1,203 | 1,200 |
| | 1,5 | 3 | 1,257 | 1,238 | 1,225 | 1,217 | 1,210 | 1,205 | 1,200 | 1,197 | 1,194 |

| HEIGHT OF THE CURTAIN WALL (m) | | $U_{CW}$ FOR A PROFILE OF 150mm USING A GLASS WITH U=1,9 W/m2K | | | | | | | | |
|---|---|---|---|---|---|---|---|---|---|---|
| | | 2 | 2,5 | 3 | 3,5 | 4 | 4,5 | 5 | 5,5 | 6 |
| CURTAIN WALL HALF WIDTH (m) | 0,5 | 1 | 2,012 | 2,005 | 2,000 | 1,996 | 1,994 | 1,992 | 1,990 | 1,988 | 1,987 |
| | 0,625 | 1,25 | 1,997 | 1,990 | 1,985 | 1,981 | 1,979 | 1,977 | 1,975 | 1,974 | 1,972 |
| | 0,75 | 1,5 | 1,987 | 1,980 | 1,975 | 1,971 | 1,969 | 1,967 | 1,965 | 1,964 | 1,962 |
| | 0,875 | 1,75 | 1,980 | 1,973 | 1,968 | 1,964 | 1,962 | 1,959 | 1,958 | 1,956 | 1,955 |
| | 1 | 2 | 1,975 | 1,967 | 1,962 | 1,959 | 1,956 | 1,954 | 1,952 | 1,951 | 1,950 |
| | 1,125 | 2,25 | 1,971 | 1,963 | 1,958 | 1,955 | 1,952 | 1,950 | 1,948 | 1,947 | 1,946 |
| | 1,25 | 2,5 | 1,967 | 1,960 | 1,955 | 1,951 | 1,949 | 1,947 | 1,945 | 1,944 | 1,942 |
| | 1,375 | 2,75 | 1,965 | 1,957 | 1,952 | 1,949 | 1,946 | 1,944 | 1,942 | 1,941 | 1,940 |
| | 1,5 | 3 | 1,962 | 1,955 | 1,950 | 1,946 | 1,944 | 1,942 | 1,940 | 1,939 | 1,937 |

# FIG. 11

**EP 3 628 790 B1**

**REFERENCES CITED IN THE DESCRIPTION**

**Patent documents cited in the description**

- FR 3037856 A1